(19) Europäisches Patentamt / European Patent Office / Office européen des brevets

(11) **EP 2 687 863 B1**

(12) **FASCICULE DE BREVET EUROPEEN**

(45) Date de publication et mention
de la délivrance du brevet:
**23.11.2016 Bulletin 2016/47**

(51) Int Cl.:
***G01S 7/28*** *(2006.01)*      *G01S 13/90* *(2006.01)*
***G01S 13/28*** *(2006.01)*

(21) Numéro de dépôt: **13176203.1**

(22) Date de dépôt: **11.07.2013**

(54) **Procédé de fitrage d'image radar polluée par des échos ambigus en distance**

Verfahren zum Filtern von Radarbildern, die durch irreführende Echos aus der Ferne verzerrt werden

Method for filtering radar images polluted by remote ambiguous echoes

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.07.2012 FR 1202038**

(43) Date de publication de la demande:
**22.01.2014 Bulletin 2014/04**

(73) Titulaire: **Thales
92400 Courbevoie (FR)**

(72) Inventeurs:
  • **Bosser, Luc
    78851 Elancourt (FR)**
  • **Genin, Jean-Baptiste
    78851 Elancourt (FR)**
  • **Hottier, Vincent
    78851 Helancourt (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
**US-A1- 2006 170 585**

• **PING-PING HUANG ET AL: "The Research of Multiple-input and Multiple-output SAR Based on Frequency Synthetic", JOURNAL OF ELECTRONICS & INFORMATION TECHNOLOGY, vol. 33, no. 2, 3 mars 2011 (2011-03-03), pages 401-406, XP055061273, ISSN: 1009-5896, DOI: 10.3724/SP.J.1146.2009.01409**
• **YUAN HAOJUAN ET AL: "Coherent spectrum synthesis of frequency-stepped chirp signal", 2009 IET INTERNATIONAL RADAR CONFERENCE,, 22 avril 2009 (2009-04-22), XP055061285, ISSN: 0537-9989 ISBN: 978-1-84-919010-7**
• **LI Y-C ET AL: "Stepped-frequency inverse synthetic aperture radar imaging based on adjacent pulse correlation integration and coherent processing", IET SIGNAL PROCESSING, THE INSTITUTION OF ENGINEERING AND TECHNOLOGY, MICHAEL FARADAY HOUSE, SIX HILLS WAY, STEVENAGE, HERTS. SG1 2AY, UK, vol. 5, no. 7, 14 octobre 2011 (2011-10-14), pages 632-642, XP006043160, ISSN: 1751-9675, DOI: 10.1049/IET-SPR.2009.0301**
• **GANG YAO ET AL: "Simulation of step frequency SAR error compensation", COMMUNICATIONS AND NETWORKING IN CHINA (CHINACOM), 2011 6TH INTERNATIONAL ICST CONFERENCE ON, IEEE, 17 août 2011 (2011-08-17), pages 556-559, XP032119968, DOI: 10.1109/CHINACOM.2011.6158216 ISBN: 978-1-4577-0100-9**
• **XIA BAI ET AL: "Airborne SAR Imaging with 0,1m Resolution: Bandwidth Management and Image Formation", ACTA ELECTRONICA SINICA, vol. 35, no. 9, 1 septembre 2007 (2007-09-01), XP055061274, ISSN: 0372-2112**

- **DANG HONGXING ET AL: "Stepped frequency chirp signal SAR imaging", 2007 1ST ASIAN AND PACIFIC CONFERENCE ON SYNTHETIC APERTURE RADAR, 1 janvier 2007 (2007-01-01), pages 14-18, XP055061360, DOI: 10.1109/APSAR.2007.4418544 ISBN: 978-1-42-441187-0**

**Description**

La présente invention concerne le domaine de l'imagerie radar. La présente invention concerne plus particulièrement un procédé de filtrage d'une image Distance-Doppler brute produite par un radar et polluée par des échos ambigus en distance liés à l'utilisation d'une forme d'onde à bande synthétique à l'émission.

On s'intéresse ici au signal collecté par un radar Doppler à impulsions, utilisant, à l'émission, une forme d'onde à bande synthétique. D'une manière très générale, un radar Doppler à impulsions émet un signal électromagnétique composé d'une série d'impulsions régulièrement espacées dans le temps. Lorsqu'il n'est pas en train d'émettre, le radar collecte les signaux rétrodiffusés au cours du temps par les réflecteurs éclairés par le faisceau radar 25. L'analyse de l'ensemble de ces signaux rétrodiffusés permet ensuite de fournir une représentation bidimensionnelle Distance-Doppler de l'ensemble des réflecteurs éclairés par le faisceau radar 25. Dans cette représentation, chaque réflecteur est caractérisé par une Distance par rapport au centre de phase de l'antenne radar et par une fréquence Doppler, proportionnelle à la vitesse de rapprochement du réflecteur (évolution de la distance radar-réflecteur au cours du temps).

La «finesse» avec laquelle les positions des différents réflecteurs peuvent être discriminées en Distance est inversement proportionnelle à la largeur de bande B couverte lors de l'émission du train d'impulsions. L'émission et le traitement d'une forme d'onde couvrant une largeur de bande B importante (donc permettant de séparer finement les échos en Distance) posent cependant un certain nombre de contraintes, qui peuvent s'avérer incompatibles avec le matériel existant. L'utilisation d'une forme d'onde à bande synthétique appelé également «step-frequency» permet d'assouplir certaines de ces contraintes pour permettre d'atteindre la résolution radiale (Distance) visée. Ce procédé consiste à émettre la bande «par morceaux», au travers d'un motif de K impulsions émettant chacune un $K^{\text{ième}}$ de la bande totale B. En contrepartie, ce type de forme d'onde présente certains inconvénients, liés à la multiplication par un facteur K de la fréquence de répétition avec laquelle sont émises les impulsions. En particulier, la représentation Distance-Doppler finale peut être polluée par la présence d'échos «fantômes» dont l'énergie se retrouve diluée sur une plage Distance importante. Les distances auxquelles apparaissent ces échos fantômes ne correspondent pas à aux distances réelles des réflecteurs dont ils sont issus. On parle «d'ambiguïtés distance ".

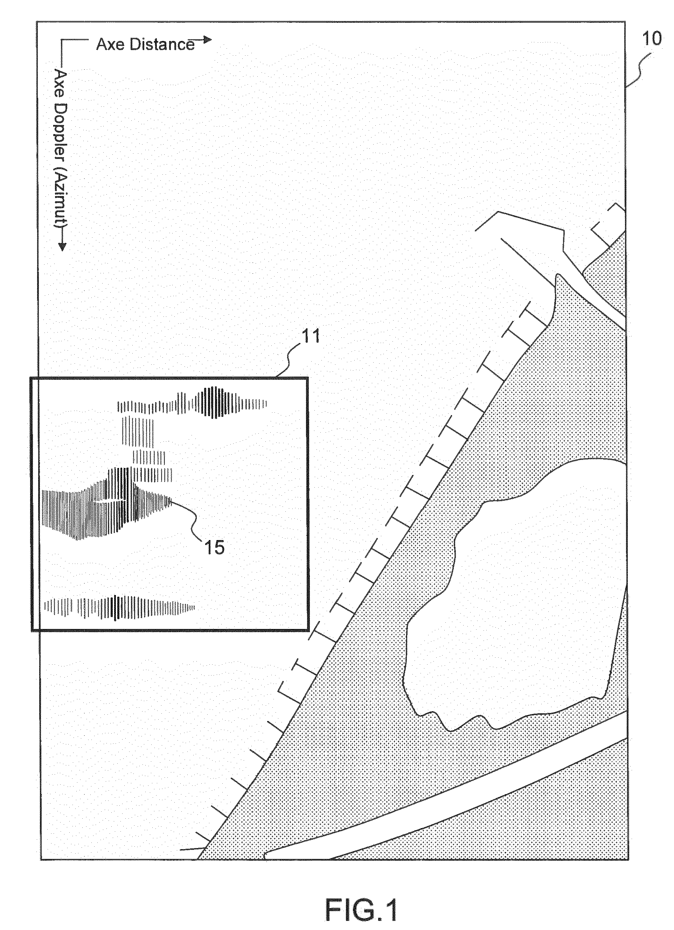

A titre d'exemple, la figure 1 représente une image SAR 10 «brute» dans un système d'axes Distance-Doppler obtenue à partir d'une acquisition utilisant une forme d'onde à bande synthétique. Cette figure illustre la pollution occasionnée par la présence d'échos ambigus en distance 15. Cette pollution est notamment visible dans la zone 11.

Dans le cas d'une forme d'onde «classique», l'intégralité de la bande B nécessaire à l'obtention de la résolution distance désirée est émise à chaque impulsion. De façon différente, le principe de la bande synthétique consiste à émettre la bande B par morceaux, suivant un motif composé de K impulsions. Chacune de ces impulsions émet une largeur de bande égale à un $K^{\text{ième}}$ de la bande B. Le spectre associé à la $k^{\text{ième}}$ impulsion du motif est centré sur une fréquence porteuse $F_k$ différentes d'impulsion à impulsion. Au final, la réunion des K spectres associés aux K impulsions du motif permet de couvrir l'intégralité de la bande totale B.

Avec une telle forme d'onde, la solution classiquement utilisé pour atténuer la pollution liée aux ambiguïtés distance consiste à choisir un motif d'émission où les fréquences porteuses $F_k$ ne sont pas émises de manière monotone c'est-à-dire suivant un ordre croissant ou décroissant. Au contraire, le motif d'émission est choisi de manière à ce que 2 impulsions consécutives, ou proches temporellement, aient deux spectres les plus «disjoints» possibles.

Cependant, cette solution ne permet pas d'éliminer systématiquement la contribution parasite des ambiguïtés Distance. Par exemple, dans le cas d'une acquisition à l'aide d'un radar à synthèse d'ouverture (ou acquisition SAR pour Synthetic Aperture Radar selon le sigle anglo saxon) utilisant une géométrie d'acquisition «rasante» où l'empreinte du faisceau au sol couvre une plage Distance très importante, il est souvent difficile voire impossible de trouver un ordre d'émission des fréquences permettant de réjecter de manière satisfaisante la pollution liée aux échos ambigus en Distance.

Un but de l'invention est notamment de corriger les inconvénients précités en proposant un procédé de filtrage permettant d'atténuer la pollution générée par ce phénomène d'ambiguïté distance.

A cet effet, l'invention a pour objet un procédé de filtrage d'une image Distance-Doppler brute produite par un radar et polluée par des échos ambigus en distance liés à l'utilisation d'une forme d'onde à bande synthétique à l'émission, ledit procédé comprenant au moins :

- une étape de transposition de l'image Distance-Doppler dans le domaine fréquentiel ;

- une étape de modélisation de la répartition de l'énergie parasite liée à la présence d'échos ambigus à l'intérieur de la bande synthétique ;

- une étape de filtrage à l'aide d'un filtre lacunaire, la fonction de transfert dudit filtre étant élaborée en fonction de la répartition de l'énergie parasite et d'un taux de lacunarité prédéfini.

Selon une variante de mise en oeuvre le procédé comprend une étape de transposition dans le domaine distance et une étape de filtrage consistant à calculer, pour chaque pixel de l'image résultat, la valeur minimale entre l'image Distance-Doppler brute et la ou les images lacunaires.

Selon une autre variante de mise en oeuvre le procédé comprend au moins une étape de reconstruction des lacunes du spectre de l'image lacunaire, à partir de ses parties non annulées, par modélisation dudit spectre comme une somme de signaux canoniques.

Selon une variante de mise en oeuvre la fonction de transfert du filtre lacunaire est formée d'un motif de lacunarité simple dans lequel chaque lacune est de même largeur et centrée sur la jonction entre deux spectres élémentaires.

Selon une variante de mise en oeuvre la fonction de transfert du filtre lacunaire est formée d'un motif de lacunarité adapté à un écho ambigu de rang d'ambiguïté donné, ladite fonction de transfert étant élaborée à partir de la répartition de l'énergie parasite associée à cet écho ambigu en simulant les étapes d'un procédé de compression distance appliqué à cet écho ambigu.

Selon une variante de mise en oeuvre le procédé comprend une étape de normalisation entre elles, des valeurs de l'image brute et de la ou les images lacunaires.

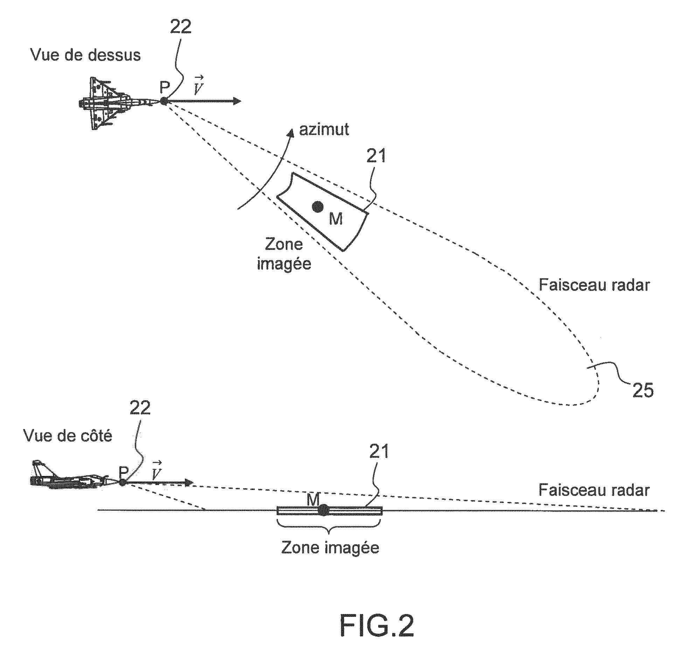

L'invention peut trouver une application avec tous les modes radars utilisant une forme d'onde à bande synthétique. Ce type de forme d'onde est généralement associé aux résolutions radiales (Distance) fines, nécessitant d'émettre une largeur de bande B importante. En particulier, son utilisation est largement répandue pour les modes d'imagerie à synthèse d'ouverture. Ces modes permettent d'imager une zone de terrain éclairée par le faisceau radar, avec une résolution pouvant aujourd'hui descendre jusqu'à la dizaine de centimètres. Ces modes d'imagerie requièrent un «défilement angulaire» des réflecteurs par rapport au centre de phase du radar. Par conséquent, le radar doit obligatoirement être en mouvement, sur une plateforme aéroportée ou spatiale, et utiliser une visée latérale. A titre d'illustration, la figure 2 présente un exemple de géométrie d'acquisition SAR à partir d'une plateforme aéroporté.

De façon avantageuse, le procédé selon l'invention permet d'améliorer le taux de réjection de la pollution générée par les réflecteurs appartenant aux plages distance ambigues associées à des valeurs de rang d'ambiguïté non multiples de K, K représentant le nombre d'impulsions du motif de la forme d'onde à bande synthétique.

D'autres particularités et avantages de la présente invention apparaîtront plus clairement à la lecture de la description ci-après, donnée à titre illustratif et non limitatif, et faite en référence aux dessins annexés, dans lesquels :

- La figure 1 représente un exemple d'image SAR polluée par des échos ambigus ;

- La figure 2 représente un exemple de géométrie d'acquisition d'une image SAR ;

- La figure 3 illustre la compression Distance dans le cas d'une forme d'onde «classique» ;

- La figure 4 représente un exemple d'acquisition d'une image SAR dans le cas d'une forme d'onde à bande synthétique ainsi que la position des plages Distance ambiguës ;

- Les figures 5 à 7 représente un exemple d'extraction des spectres élémentaires dans le cas de la compression Distance avec une forme d'onde à bande synthétique ;

- La figure 8 illustre la constitution de la bande synthétique et le filtrage final adapté aux échos non ambigus dans le cas de la compression Distance avec une forme d'onde à bande synthétique ;

- La figure 9 illustre la répartition de l'énergie liée aux échos ambigus en Distance ;

- La figure 10 représente un exemple de motif de lacunarité superposé à la répartition de l'énergie parasite dans la bande synthétique ;

- La figure 11 représente la réponse impulsionnelle associée à des exemples de fenêtres de pondération utilisées ;

- La figure 12 représente un exemple de motif de lacunarité «adapté», superposé à la fonction de répartition de l'énergie parasite ;

- La figure 13 représente un exemple de synoptique d'une variante du procédé de filtrage ;

- Les figures 14 à 16 représentent des exemples de résultats obtenus avec le procédé selon l'invention.

Il convient de noter que la présente invention va être décrite en s'appuyant sur l'exploitation de données issues d'acquisitions de radar à synthèse d'ouverture. Cet exemple d'utilisation n'est nullement limitatif et le procédé de filtrage selon l'invention peut trouver son application avec tous les modes radars utilisant une forme d'onde à bande synthétique.

A titre d'exemple, la figure 2 présente un exemple de géométrie d'acquisition SAR à partir d'une plateforme aéroporté. Dans le cas d'un mode SAR, la représentation Distance-Doppler issue du traitement des données collectées par le radar permet de fournir une "vue de dessus» de la zone imagée 21. A chaque réflecteur M, il est possible d'associer :

- une distance PM, par rapport à la position du centre de phase 22 de l'antenne à un instant donné, le point P désignant la position du centre de phase 22 à cet instant.

- Un angle θ (non représenté), défini entre le vecteur vitesse du porteur à ce même instant et le vecteur $\overrightarrow{PM}$.

Cet angle θ peut se déduire directement de la connaissance de la fréquence Doppler $fd_M$ du réflecteur M par exemple par la formule :

$$fd_M = 2V/\lambda \cos(\theta)$$

Dans cette expression, V désigne la norme de la vitesse du centre de phase 22 de l'antenne et λ désigne la longueur d'onde centrale de l'onde électromagnétique émise par le radar.

Cet angle θ permet de discriminer les échos en azimut. La séparation angulaire des différents réflecteurs est d'autant plus fine que l'angle de défilement des réflecteurs au cours de l'acquisition est important. La résolution obtenue est ici de classe métrique.

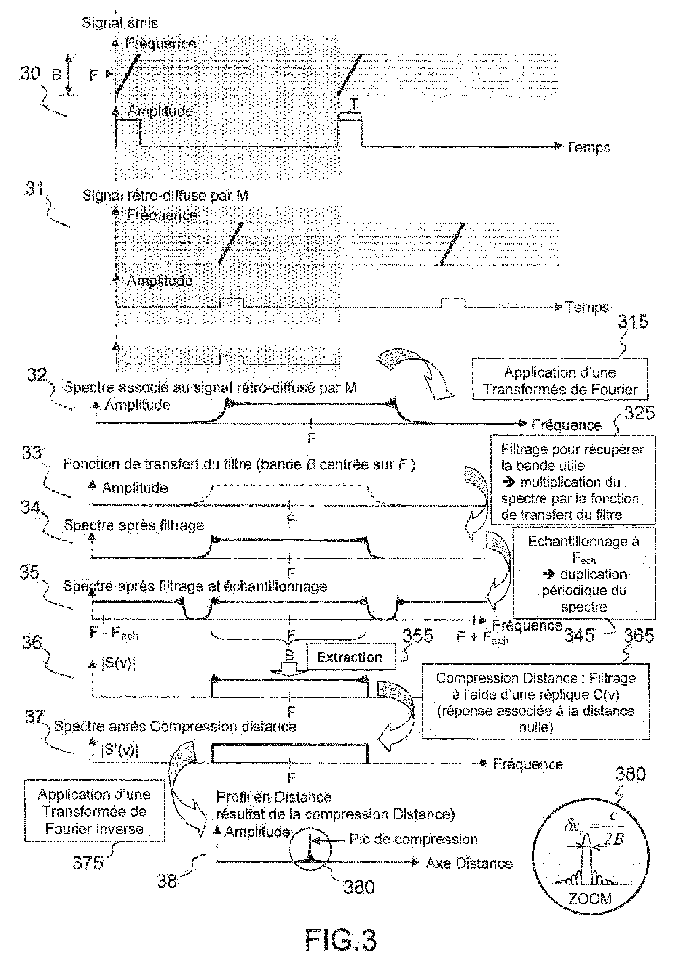

En référence à la figure 3, la compression distance va être présentée dans le cas d'une forme d'onde «classique» à l'émission. Pour cela, on considère une forme d'onde composée d'un train de N impulsions identiques émises périodiquement avec une fréquence de répétition du motif notée $f_m$. Chaque impulsion couvre une bande instantanée de largeur B, centrée sur la fréquence centrale F. La durée d'impulsion est égale à T.

Dans l'exemple utilisé, la couverture de la bande B est assurée par modulation linéaire de la fréquence de signal émis. Pour ce type de forme d'onde, on parle de «chirp». Le graphique 30 donne une représentation graphique de l'amplitude et de l'évolution de la fréquence en fonction du temps d'un tel signal.

Il est à noter que typiquement, dans une application aéroportée en bande X, la largeur de bande B est supérieure à 100 MHz et la fréquence centrale d'émission F est proche de 10 GHz.

L'élaboration de l'image Distance-Doppler passe par l'analyse des signaux rétro-diffusés au cours du temps par les réflecteurs du sol éclairés par le faisceau radar 25 du porteur. Si on considère un réflecteur M appartenant à la zone qu'on cherche à imager, après réflexion sur ce réflecteur M, le signal électromagnétique émis par un radar lors de la n$^{ième}$ impulsion donne naissance à un écho capté par ce dernier. Cet écho s'exprime comme une copie du signal émis, atténué et retardé d'un délai correspondant au temps mis par l'onde électromagnétique pour effectuer le trajet aller-retour Radar→Réflecteur→Radar.

Si P désigne la position du centre de phase 22 de l'antenne à l'émission de la n$^{ième}$ impulsion, la distance PM est associée à un retard $T_M$, d'après la relation suivante : $T_M = 2 PM / c$, où c désigne la vitesse de la lumière.

On considère ici que pour l'ensemble de signaux rétro-diffusés par les réflecteurs contenus dans la zone imagée 21, les échos issus de la n$^{ième}$ impulsion sont tous reçus par le radar avant l'émission de la (n+1)$^{ième}$ impulsion. Ceci est généralement le cas pour un mode SAR aéroporté utilisant une forme d'onde «classique».

Le procédé de " Compression Distance " a pour but, à partir du signal reçu associé à la n$^{ième}$ impulsion émise, de générer un «profil comprimé» suivant l'axe distance. Ce profil s'écrit comme la somme des différents profils associés aux différents réflecteurs composant la zone imagée. Pour un réflecteur M donné, le profil distance se compose d'un pic de compression dont la largeur est égale à c/(2B), centré sur la distance PM.

Pour parvenir à ce résultat , les opérations suivantes sont effectuées sur le signal reçu composé des échos réfléchis par un réflecteur issus de la n$^{ième}$ impulsion émise :

- Une transposition dans le domaine fréquentiel 315 par exemple par application d'une Transformée de Fourier suivant l'axe Distance.
- Une opération de filtrage 325 pour ne conserver que la bande utile associée aux signaux d'intérêt.

Cette bande utile occupe une largeur B centrée sur la fréquence centrale d'émission F. Dans le domaine spectral cette opération consiste à multiplier le spectre du signal reçu par la fonction de transfert d'un filtre de largeur B. Il est important de noter que cette fonction de transfert, qui laisse passer les signaux dont les fréquences sont contenues à l'intérieur d'une plage fréquentielle de largeur B centrée sur F, n'est pas rigoureusement nulle à l'extérieur de cette plage. A titre d'exemple le graphique 33 présente l'amplitude en fonction de la fréquence de la fonction de transfert d'un tel filtre et le graphique 34 le résultat obtenu après application d'un tel filtre.

Il est également à noter que cette opération de filtrage est normalement précédée d'une «démodulation» du signal reçu par un signal de fréquence égale à la fréquence porteuse F du signal émis. Par souci de simplification, cette étape n'apparaît pas dans la figure 3. Elle se traduirait par un décalage fréquentiel permettant de recentrer le spectre autour de la fréquence nulle.

- Une opération de numérisation 345 du signal filtré.

Cette opération consiste à échantillonner le signal filtré (analogique) avec une fréquence d'échantillonnage $F_{ech}$. Exprimée dans le domaine spectral, cette opération se traduit par une duplication périodique du spectre. Cette opération se traduit par la convolution du signal avec un peigne de Dirac dont les pics sont espacés d'une valeur $F_{ech}$. Le spectre résultant est donc un spectre périodique, de période $F_{ech}$.

Comme le montre l'exemple de la figure 3, cette duplication necessite une contrainte sévère sur la fréquence d'échantillonnage $F_{ech}$ du signal reçu. Celle-ci doit impérativement majorer la largeur de bande émise B sous-peine de voir les spectres se chevaucher. Pour des résolutions distance fines, nécessitant l'émission d'une bande large, cette contrainte devient généralement impossible à tenir avec les codeurs existants. C'est précisément pour assouplir cette contrainte sur la valeur minimale acceptable pour la fréquence d'échantillonnage que les formes d'onde à bande synthétique ont été développées.

- Filtrage 365 pour «comprimer l'impulsion "

A partir de cette dernière représentation spectrale (cf graphique 35), il est possible de retrouver le spectre correspondant au résultat d'une transformée de fourier discrète appliquée sur le signal reçu, démodulé, filtré puis échantillonné par le radar avec une Fréquence $F_{ech}$. Pour ce faire, on extrait 355 la plage fréquentielle de largeur $F_{ech}$ centrée sur F. De ce spectre, on conserve uniquement la plage fréquentielle utile de largeur B. Ce spectre est noté S(v), où v indice l'axe fréquentiel.

L'opération suivante consiste en une opération de filtrage 365 permettant de «comprimer» l'impulsion pour la ramener finalement à un pic de compression de finesse c/(2B) dans le domaine distance. Pour ce faire, on utilise un spectre C(v) obtenu en appliquant l'ensemble des opérations précédemment décrites au signal rétro-diffusé par un écho virtuel situé à distance nulle : en l'occurrence, ce signal est une copie de l'impulsion émise. Le spectre S'(v), résultat du filtrage, peut s'exprimer comme suit :

$$S'(v) = \frac{S(v) \times C^*(v)}{|C(v)|^2} \, ,$$

où $C^*(v)$ désigne le conjugué de $C(v)$

Pour un réflecteur ponctuel M, dont l'écho s'écrit comme le signal émis retardé, ce spectre résultat peut donc être caractérisé par une amplitude constante sur une plage fréquentielle de largeur B et nulle en dehors de cette plage. A l'intérieur de cette plage, la phase du spectre S'(v) est une phase linéaire, dont la pente est proportionnelle à la distance PM. Cette phase peut s'écrire $4\pi \times PM \times v/c$, à une constante près. Après retour dans le domaine Distance 375 par application, par exemple d'une Transformée de Fourier inverse, la «réponse impulsionnelle» associé à ce réflecteur ponctuel M est donc un sinus cardinal positionné à la distance PM. La largeur du lobe principal de ce pic de compression 380 en sinus cardinal définit la «résolution distance» de la forme d'onde. Cette largeur, mesurée classiquement à 3dB sous le niveau maximum du pic, est égale à 0,9×c/(2B). Cette dernière valeur, caractérisant la résolution distance, est généralement approximée par c/(2B).

Il est à noter que ce pic de compression 380 en sinus cardinal présente un niveau de lobes secondaires élevé. Le premier lobe secondaire se situe généralement à environ -13 dB sous le niveau du lobe principal. Afin de diminuer ce niveau de lobes secondaire, on multiplie généralement le spectre S'(v) par une fonction de pondération, avant de revenir dans le domaine Distance par exemple par application d'une transformée de Fourier inverse. Cette diminution du niveau des lobes secondaires se fait néanmoins au détriment de la résolution.

L'utilisation d'une forme d'onde «classique» est donc limitée par la contrainte imposée par la fréquence d'échantillonnage. Comme chaque impulsion émise couvre l'intégralité de la bande B requise pour atteindre la résolution distance désirée, le radar doit pouvoir échantillonner le signal reçu avec une fréquence d'échantillonnage $F_{ech}$ supérieure à cette largeur de bande B. Pour des résolutions distance fines, associées à des largeurs de bande importantes, cette contrainte sur la fréquence d'échantillonnage peut s'avérer impossible à tenir par les codeurs de la chaîne de réception du radar.

L'utilisation d'une forme d'onde à bande synthétique est une solution couramment utilisée pour éviter ce problème. Avec une telle forme d'onde, le motif d'émission répété périodiquement avec une fréquence $f_m$ n'est plus constitué par une impulsion unique couvrant à elle seule l'intégralité de la bande B. Le motif utilisé est désormais constitué de K impulsions disjointes et régulièrement espacées temporellement. Dans ce motif, chaque impulsion k émet une subdivision de la bande totale B (classiquement un $K^{\text{ième}}$ de la bande B) centrée sur une fréquence porteuse $F_k$ différente d'impulsion à impulsion. Dans le domaine spectral, la réunion des K spectres associés aux K impulsions du motif permet de couvrir la bande B dans son ensemble. Cette propriété est mise à profit pour reconstituer par traitement l'intégralité de la bande B, en juxtaposant dans le domaine spectral les contributions apportées par chacun des K spectres «élémentaires» associés aux signaux rétrodiffusés issus des K impulsions du motif d'émission.

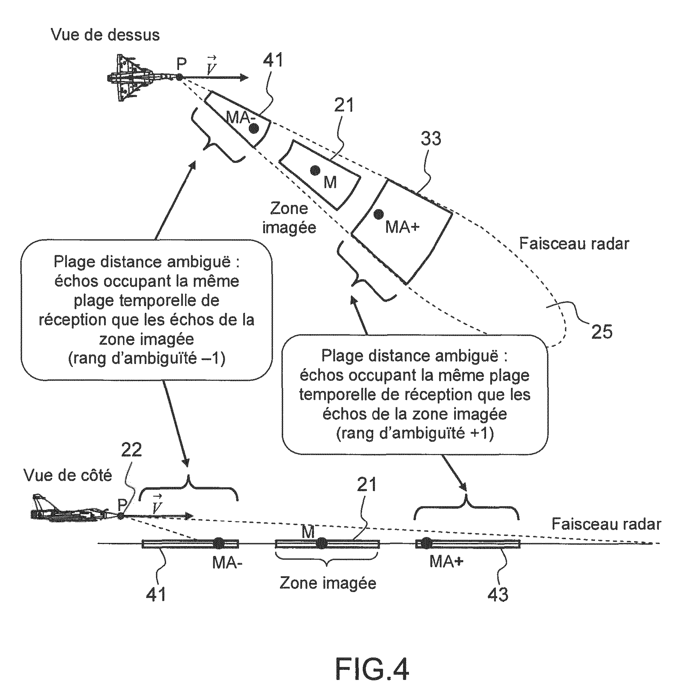

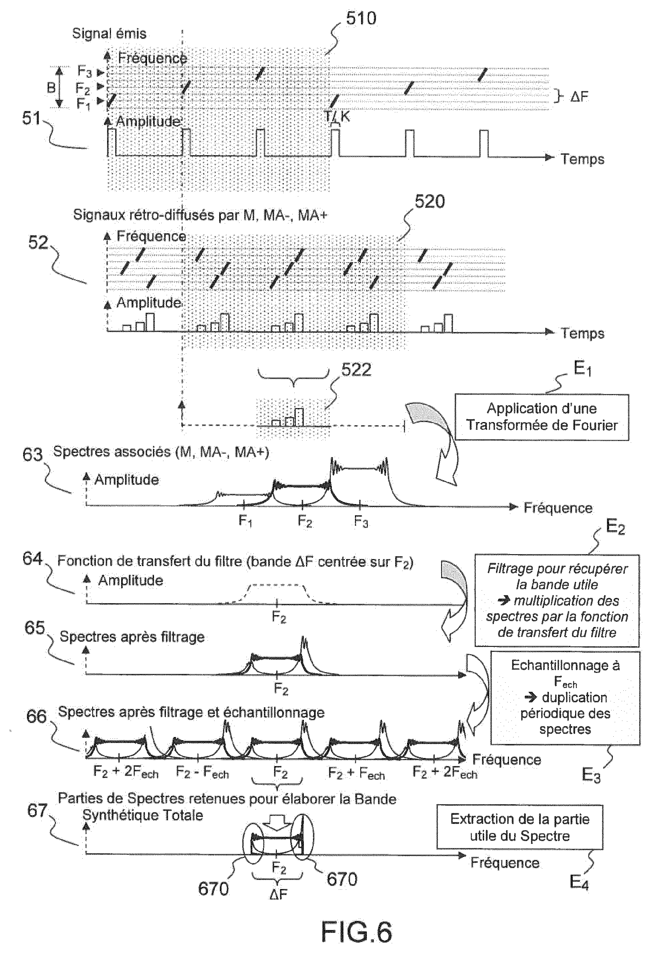

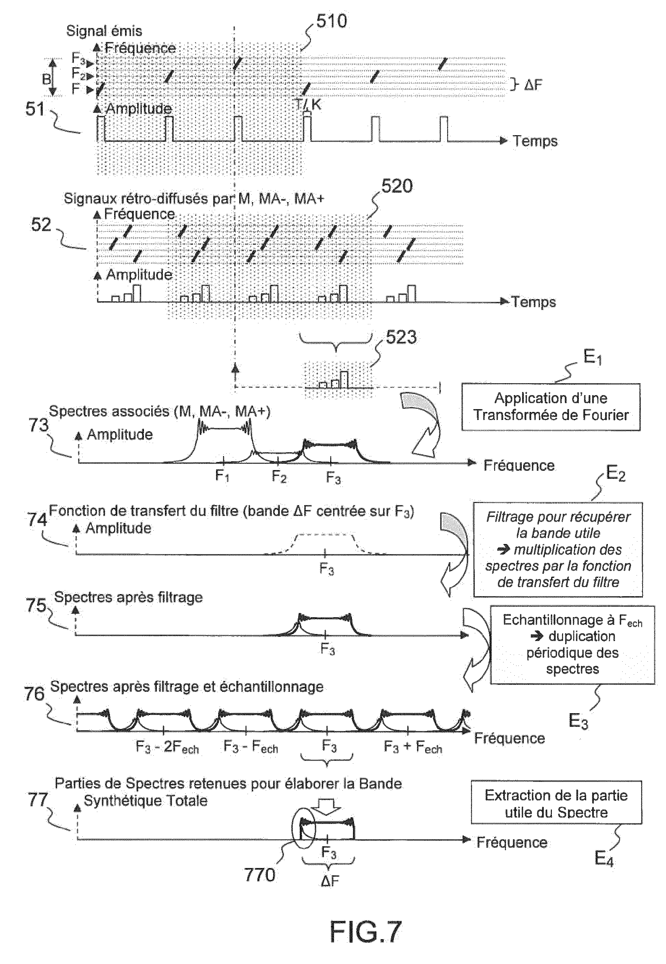

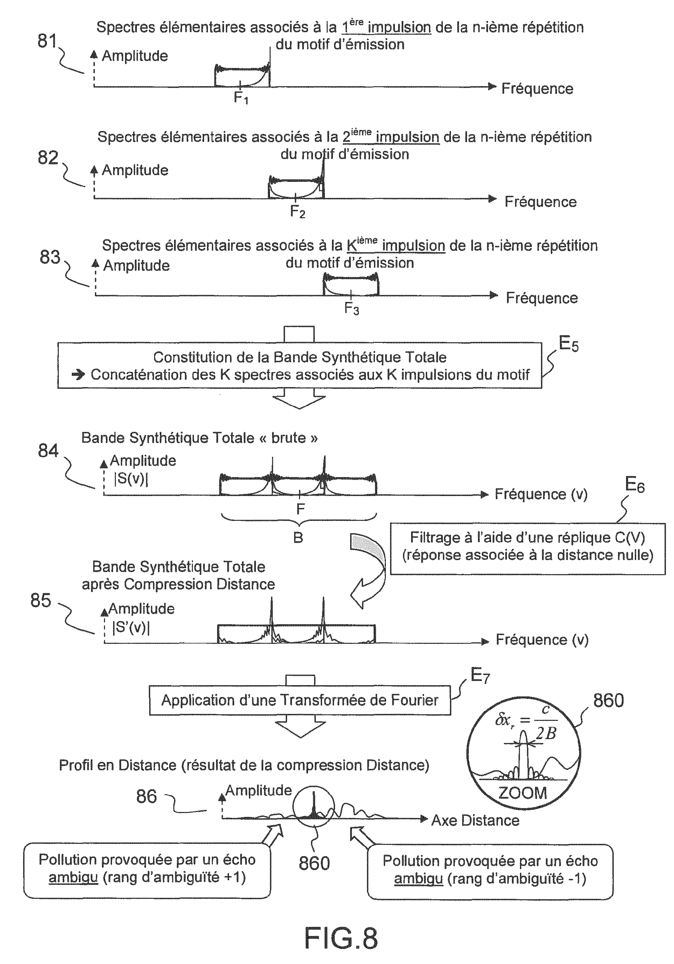

Les figures 4 à 8 illustrent le principe de ce procédé. Dans l'exemple présenté, le motif d'émission 510 utilisant une forme d'onde synthétique comporte K=3 impulsions. Afin de faciliter la comparaison avec le cas précédemment décrit, la largeur de bande B et la fréquence $f_m$ de répétition du motif d'émission sont choisies identiques. Chaque impulsion du motif émet une largeur de bande égale à B/K, par modulation linéaire de fréquence. Dans cet exemple, les K fréquences porteuses sont émises suivant l'ordre suivant : si on considère la $k^{\text{ième}}$ impulsion du motif, la largeur de bande B/K est centrée sur une fréquence porteuse $F_k = F + (k-2) \times \Delta F$, avec $\Delta F = B/K$. La bande totale couverte par la réunion des K spectres associés aux K impulsions est ainsi égale à B.

L'avantage majeur apporté par une forme d'onde à bande synthétique est qu'à la réception, la fréquence d'échantillonnage des codeurs peut se contenter de majorer la largeur de la plage fréquentielle couverte lors de l'émission d'une seule impulsion du motif soit B/K, et non plus l'intégralité de la bande B. Au premier ordre, les contraintes sur la fréquence d'échantillonnage $F_{ech}$ peuvent donc être assouplies d'un facteur K.

En contrepartie, puisque la fréquence $f_m$ de répétition du motif d'émission doit rester inchangée par rapport à une forme d'onde classique équivalente, il est nécessaire de diviser la durée $T_r$ séparant deux impulsions consécutives, d'un facteur K. Accessoirement, afin de conserver la même puissance moyenne émise, la durée d'impulsion est elle aussi divisée d'un facteur K.

Cette multiplication par K de la fréquence $f_m$ de répétition des impulsions a la conséquence suivante :

On considère la plage temporelle 520 de réception associée à la $k^{ième}$ impulsion de la $n^{ième}$ répétition du motif d'émission. Cette plage temporelle correspond à la plage à l'intérieur de laquelle sont reçus les échos issus de cette impulsion et générés par les réflecteurs appartenant à la zone de terrain qu'on cherche à imager. Dans cette même plage 520 sont également reçus les échos issus de l'impulsion précédente et générés par des réflecteurs situés à une distance égale à $PM + c \times T_r/2$ ainsi que les échos issus de l'impulsion suivante et générés par des réflecteurs situés à une distance égale à $PM - c \times T_r/2$ (à condition que cette dernière valeur soit positive).

Pour une distance D donnée, on peut ainsi définir un ensemble de distances ambigues $D_\alpha$ associées à différentes valeurs de rang d'ambiguité $\alpha$ par la relation $D\alpha = D + \alpha \times cT_r/2$ où $\alpha$ décrit l'ensemble des entiers relatifs tels que $D_\alpha > 0$. Ces valeurs correspondent aux distances auxquelles se trouvent les réflecteurs dont les échos seront reçus dans la même plage temporelle que les échos issus des réflecteurs situés à la distance D.

On parle ainsi d'échos ambigus en Distance et de plages Distance ambigues associées à la plage Distance d'intérêt. Dans le cas du mode SAR, cette plage Distance d'intérêt correspond à la plage Distance occupée par les réflecteurs de la zone 21 que l'on cherche à imager. Dans l'exemple du mode SAR utilisé ici, ce phénomène, qui existe quel que soit le type de forme d'onde utilisé, devient problématique à partir du moment où des réflecteurs situées à l'intérieur de l'empreinte dessinée au sol par le faisceau radar 25 sont positionnés à des distances appartenant à des plages Distance ambigues. Cette configuration est d'autant plus probable que la période de répétition des impulsions $T_r$, définissant l'espacement entre les plages Distance ambigues, est petite. Par conséquent, les modes utilisant une forme d'onde à bande synthétique où la valeur de la période de répétition $T_r$ est divisée d'un facteur K par rapport à une forme d'onde " classique» sont très sévèrement pénalisés.

A titre d'illustration, la figure 4 présente l'apparition de plages distances ambigues 41, 43, interceptant l'empreinte au sol du faisceau radar 25, liées à l'utilisation d'une forme d'onde à bande synthétique.

Si on considère deux formes d'onde, l'une classique, l'autre à bande synthétique, utilisant la même fréquence de répétition $f_m$ du motif d'émission, les plages Distance ambigues associées à la forme d'onde classique correspondent, aux effets de bord près, aux plages distance ambigues de la forme d'onde à bande synthétique associées aux valeurs de rang d'ambiguité multiples de K.

Pour les valeurs de rang d'ambiguité non multiples de K, les échos issus des réflecteurs appartenant aux plages Distance ambigues présentent la particularité d'être reçus sur la même plage temporelle de réception que les échos issus de la zone à imager, mais occupent spectralement une plage différente. Par conséquent, la majeure partie de l'énergie associés à ces échos parasites peut être éliminée par filtrage. De façon à augmenter l'efficacité de ce filtrage, les motifs d'émissions respectent généralement les règles suivantes :

- Les intersections entre les K spectres associés aux K impulsions du motif sont les plus réduites possible. Le spectre associé à une impulsion ne doit pas empiéter significativement sur le spectre immédiatement contigu en fréquence. Cette propriété est antagoniste de la condition (nécessaire) selon laquelle la réunion des K spectres doit couvrir sans lacune l'ensemble de la bande B.

- les K fréquences porteuses $F_k$ sont dans la mesure du possible émises de manière à ce que 2 impulsions proches temporellement soient suffisamment espacées fréquentiellement, c'est-à-dire que leurs spectres soient quasiment disjoints. Ainsi, la pollution générée par une plage Distance ambiguë «proche» est très éloignée fréquentiellement de la plage fréquentielle occupée par les échos issus de la zone d'intérêt à imager, et sa réjection est donc très importante. Pour les motifs comportant un nombre important d'impulsions, cette dernière règle conduit à émettre les fréquences $F_k$ suivant un ordre non monotone.

Ces deux règles ne permettent cependant pas de réjecter complètement la pollution générés par l'ensemble des réflecteurs ambigus en distance.

De façon à limiter cette pollution, l'invention exploite avantageusement une propriété propres aux échos ambigus en distance associé aux rang d'ambiguité non multiples de K c'est-à-dire les échos parasites occupant une plage de réception temporelle identique aux échos d'intérêt, mais sur une plage fréquentielle différente. A l'issue des opérations de Compression Distance, la répartition spectrale de l'énergie associée à ces échos parasites présente une signature particulière dans le domaine Fréquentiel. Cette «signature particulière» est mise en évidence à l'aide des figures 4 à 8.

En référence à ces figures les grandes étapes d'une compression Distance à bande synthétique vont être présentées. Dans cet exemple, on considère les échos rétro-diffusés par 3 réflecteurs :

- un réflecteur M, appartenant à la zone d'intérêt imagée 21 ;

- un réflecteur MA- appartenant à la plage Distance ambigue 41 associée à la valeur de rang d'ambiguité $\alpha = -1$ Cette plage Distance correspond à la première plage Distance ambiguë située avant la plage Distance d'intérêt ;

- Un réflecteur MA+ appartenant à la plage Distance ambiguë 43 associée à la valeur de rang d'ambiguité $\alpha = +1$. Cette plage Distance correspond à la première plage Distance ambiguë située après la plage Distance d'intérêt.

Comme vu précédemment, le principe de la compression distance avec une forme d'onde synthétique est de reconstituer l'intégralité d'une bande B par traitement, en juxtaposant, dans le domaine fréquentiel, les K spectres «élémentaires» associées aux K signaux collectés après réception des K impulsions du motif d'émission.

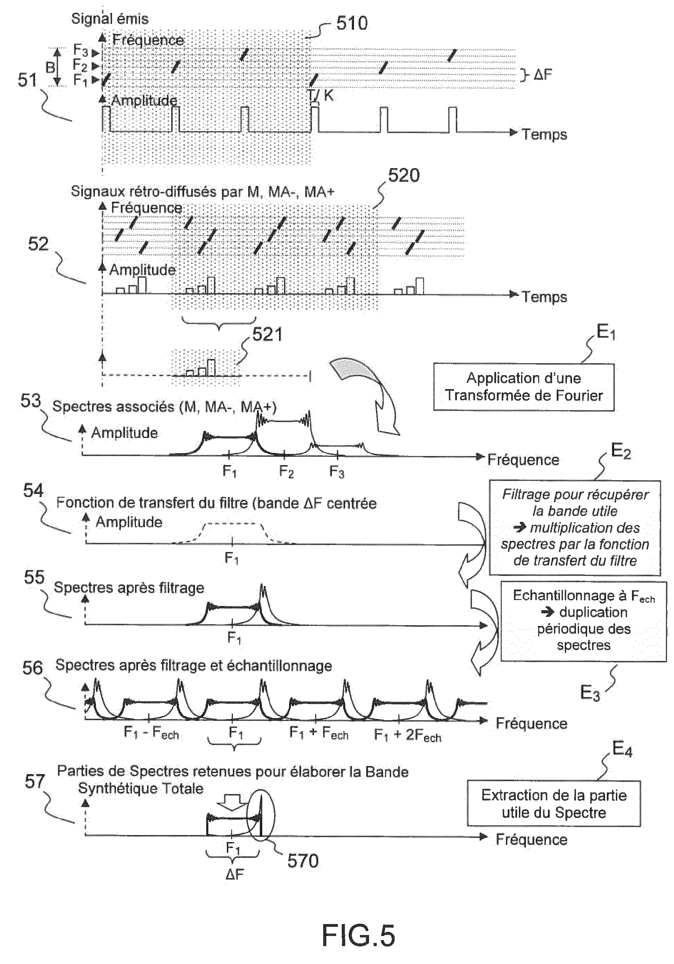

Le chronogramme 51 de la figure 5 représente un exemple de forme d'onde à bande synthétique pouvant être émis par un radar mettant en oeuvre l'invention et le chronogramme 52 des exemples d'échos reçus par le radar après réflexion de l'onde émise sur les réflecteurs.

Dans le chronogramme 52 on s'intéresse à la plage de réception 520 associée à la $n^{ième}$ répétition du motif d'émission 510 et plus particulièrement à la plage temporelle 521, 522 ou 523 de réception associée à la $k^{ième}$ impulsion de la $n^{ième}$ répétition du motif d'émission. Cette plage temporelle peut être définie par les instants auxquelles les échos issus de cette impulsion et réflechis par les réflecteurs de la zone d'intérêt sont collectés par le radar.

Dans cette plage de réception, sont reçus des échos issus des réflecteurs M, MA- et MA+. Ces échos sont issus d'impulsions différentes et donc occupent 3 plages spectrales différentes :

- Le signal rétrodiffusé par le réflecteur M occupe une plage spectrale centrée sur la porteuse $F_k$
- Le signal rétrodiffusé par MA- occupe une plage spectrale centrée sur la porteuse $F_{k+1}$ (ou $F_1$ si k=K)
- Le signal rétrodiffusé par MA+ occupe une plage spectrale centrée sur la porteuse $F_{k-1}$ (ou $F_K$ si k = 1)

Pour ces 3 signaux, la majeure partie de l'énergie occupe dans le domaine spectrale une plage de largeur B/K. Cependant, il est à noter que l'énergie n'est pas nulle en dehors de cette plage, et que les 3 spectres associés aux 3 réflecteurs empiètent les uns sur les autres. Ceci est illustré par les graphiques 53, 63 et 73 qui présentent le spectre associé après passage dans le domaine fréquentiel par exemple par transformé de Fourier E1.

Il est à noter que pour 3 réflecteurs M, MA- et MA+ de réflectivité similaire c'est-à-dire de même Surface Equivalente Radar, l'amplitude de l'écho capté par le radar diffère d'un réflecteur à l'autre. En effet, puisque leurs positions sont différentes (MA- est plus proche du radar, MA+ plus éloigné) et qu'ils ne bénéficient pas du même gain d'antenne (le faisceau 25 pointe sur M et les réflecteur MA- et MA+ sont en revanche excentrés angulairement par rapport à cette direction de pointage pour laquelle le gain est maximal), ils ne bénéficient pas du même bilan de liaison, l'énergie reçu différant suivant le réflecteur considéré. Ainsi, dans l'exemple utilisé, l'amplitude de l'écho issu de MA- est la plus forte, du fait de sa distance proche et de son éclairement par le lobe principal du faisceau radar 25.

Pour calculer la contribution du $k^{ième}$ spectre élémentaire à la bande synthétique totale, à partir du signal collecté à l'intérieur de la plage de réception 521, 522 ou 523 associée à la $k^{ième}$ impulsion de la $n^{ième}$ répétition du motif d'émission, les opérations menées reprennent la démarche décrite précédemment dans le cadre d'une forme d'onde classique.

Un filtrage E2 permet de ne conserver que la bande utile associée aux signaux d'intérêt. Cette bande utile occupe une largeur B/K centrée sur la fréquence porteuse $F_k$. Dans le domaine fréquentiel, domaine image du domaine Distance, par application d'une transformée de Fourier, cette opération consiste à multiplier le spectre du signal reçu par la fonction de transfert d'un filtre de largeur B/K. A titre d'illustration, les graphiques 54, 64 et 74 représentent, en fonction de la fréquence, l'amplitude d'un exemple de fonction de transfert d'un tel filtre et les graphiques 55, 65 et 75 l'amplitude des résultats obtenus après filtrage en fonction de la fréquence.

Il est à noter que cette fonction de transfert, qui laisse passer les signaux dont les fréquences sont contenues à l'intérieur d'une plage fréquentielle de largeur B/K centrée sur $F_k$, n'est pas rigoureusement nulle à l'extérieur de cette plage.

Cette opération de filtrage est normalement précédée d'une démodulation du signal reçu par un signal de fréquence égale à la fréquence porteuse $F_k$ du signal émis. Par souci de simplification, cette étape n'est pas représentée les figures 5 à 7 . Elle se traduirait par un décalage fréquentiel permettant de recentrer le spectre autour de la fréquence nulle.

Une numérisation E3 du signal filtré est ensuit effectuée. Cette opération consiste à échantillonner le signal filtré (analogique) avec une fréquence d'échantillonnage $F_{ech}$. Exprimée dans le domaine spectral, cette opération se traduit par une duplication périodique du spectre. Plus précisément, l'opération consiste à convoluer le signal filtré avec un peigne de Dirac dont les pics sont espacés d'une valeur $F_{ech}$. Le spectre résultant est donc un spectre périodique, de période $F_{ech}$ comme le montre les graphiques 56, 66 et 76.

A partir de cette dernière représentation spectrale, il est possible de retrouver le spectre correspondant au résultat d'une transformée de Fourier discrète appliquée sur le signal reçu, démodulé, filtré puis échantillonné par le radar avec une Fréquence $F_{ech}$. Pour ce faire, on extrait la plage fréquentielle de largeur $F_{ech}$ centrée sur $F_k$. De ce spectre, on conserve uniquement la plage fréquentielle utile de largeur $\Delta F = B/K$. Les graphiques 57, 67 et 77 illustrent les résultats de l'étape d'extraction E4 de la contribution du $k^{ième}$ spectre élémentaire à la Bande Synthétique Totale

On peut remarquer sur les graphique 57, 67 et 77 que chaque spectre élémentaire est entaché de contributions parasites 570, 670 et 770 issues des échos ambigus MA- et MA+.

Pour un écho parasite appartenant à une plage Distance ambiguë donnée, la pollution engendrée se répartie sur chacun des 2 côtés de la plage spectrale utile utilisée pour élaborer la bande synthétique totale. Sur un des côtés, la présence de cette pollution résiduelle est due au fait que la plage spectrale occupée par le spectre pollueur empiète sur la plage spectrale utile occupée par les échos issus de la zone d'intérêt. Sur l'autre côté, cette pollution résiduelle est provoquée par le fait que le filtre passe-bande placé en entrée du récepteur pour sélectionner la bande utile ne possède pas une réjection infinie en dehors de cette bande. Par conséquent, après échantillonnage du signal, l'énergie parasite résiduelle vient se replier à l'intérieur de la plage spectrale utile.

A partir de ces K spectres élémentaires, le procédé de compression distance se poursuit par une étape E5 de constitution de la bande synthétique totale. Cette bande synthétique couvrant une largeur de bande B est élaborée en juxtaposant les K spectres élémentaires occupant chacuns des plages fréquentielles disjointes de largeur identique égale à B/K. A titre d'illustration, le graphique 84 représente l'amplitude de la bande synthétique brute en fonction de la fréquence.

La compression finale est ensuite assurée par filtrage E6 de la bande synthétique brute. Comme dans le cas d'une forme d'onde classique, ce dernier filtrage a pour but de dégager un pic de compression de largeur $\dfrac{c}{2B}$ (c représentant la vitesse de la lumière) dans le domaine distance, pour chaque réflecteur non ambigu en distance appartenant à la zone d'intérêt. Pour ce faire, on utilise un spectre C(v) obtenu en appliquant l'ensemble des opérations précédemment décrites au signal rétro-diffusé par un écho (virtuel) non ambigu situé à distance nulle, en l'occurrence, les K signaux associés aux K impulsions émises caractérisant ce signal sont les K copies des K impulsions composant le motif d'émission.

Comme dans le cas d'une forme d'onde classique , le spectre S'(v) résultat du filtrage peut s'exprimer comme suit :

$$S'(v) = \frac{S(v) \times C^*(v)}{\left| C(v) \right|^2} \ ,$$

où $C^*(v)$ désigne le conjugué de $C(v)$

Après retour dans le domaine Distance E7 par exemple par application d'une transformée de Fourier inverse, la « réponse impulsionnelle» ou pic de compression 860 associé au réflecteur M est un sinus cardinal positionné à la distance PM.

Il est à noter que cette réponse impulsionnelle 860 (obtenue avec une forme d'onde à bande synthétique) est identique à la réponse impulsionnelle 380 obtenue avec une forme d'onde classique émettant une largeur de bande B. La résolution distance associée est donc égale à c/(2B).

Cette compression n'est cependant effective que pour les échos non ambigus en distance. Au contraire, les échos issus des réflecteurs ambigus MA- et MA+ voient leur énergie considérablement atténuée et diluée sur une large plage distance.

A l'issue de la compression Distance, pour un réflecteur ambigu en Distance, la répartition, dans le domaine Fréquentiel, de l'énergie parasite associée à ce réflecteur présente une «signature» particulière. En première approximation, la majeure partie de cette énergie parasite se concentre à l'intérieur de plages fréquentielles de largeurs réduites situées au niveau des jonctions entre spectres élémentaires.

La caractérisation fine de cette répartition d'énergie parasite dans le domaine Fréquentiel peut être effectuée d'après la connaissance,

- Du rang d'ambiguïté du réflecteur à l'origine de la pollution,
- Des caractéristiques du motif émis, en particulier des K spectres associés aux K impulsions du motif d'émission step-frequency et de l'ordre d'émission des K fréquences porteuses $F_k$,
- De la fonction de transfert du filtre passe-bande, de largeur B/K placé en entrée du récepteur pour ne conserver que la bande utile,
- De la fréquence d'échantillonnage $F_{ech}$ des codeurs de la chaîne de réception du radar,

Dans le cas d'un mode SAR, il est possible de prédire a priori la ou les valeurs du ou des rangs d'ambiguïté le(s) plus «pollueur(s)» . En effet, il est possible d'estimer l'évolution du niveau de pollution c'est à dire l'énergie parasite, amené par un réflecteur ambigu en fonction de sa position et donc de la valeur de son rang d'ambiguïté. Cette estimation peut être effectuée d'après la connaissance :

- de la géométrie d'acquisition c'est-à-dire de la distance de prise de vue et de l'altitude du porteur ;
- de la période $T_r$ de répétition des impulsions définissant la position des plages Distance ambiguës 41, 43 ;
- de la connaissance du gain d'antenne, pour déterminer l'atténuation liée au fait que l'écho ambigu est excentré angulairement par rapport à la direction de visée du faisceau radar 25 pointant vers le centre de la zone d'intérêt 42 à imager.

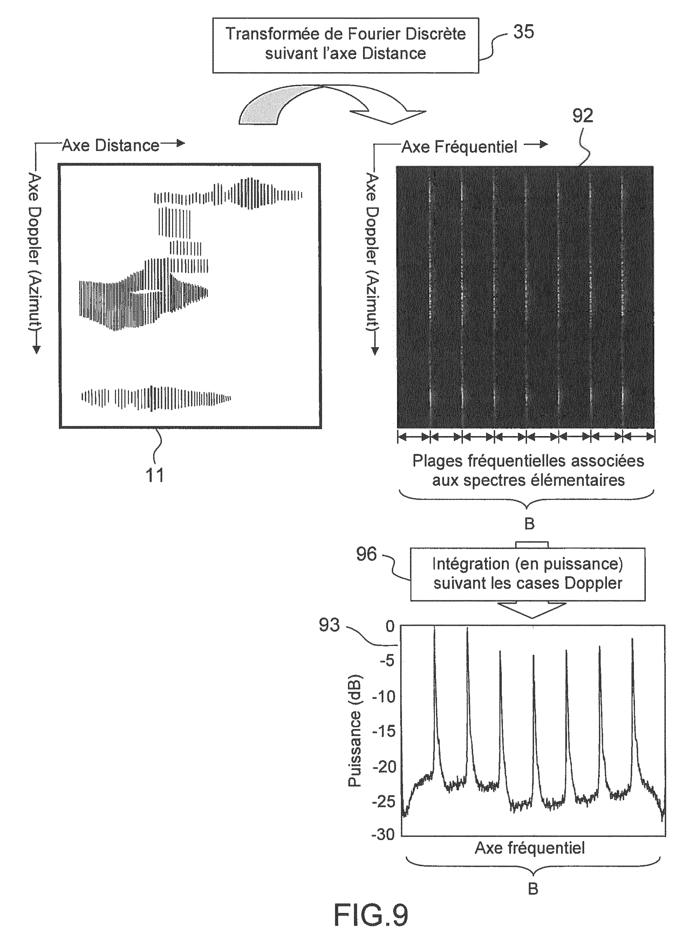

Dans certaines configurations très particulières (présence d'échos ambigus de forte réflectivité visibles sur un fond d'image très peu réflectif, comme c'est le cas sur la figure 1), la répartition particulière de l'énergie associée à un écho ambigu en Distance (concentration de la pollution aux jonctions entre spectres élémentaires) peut également être mise en évidence par analyse spectrale. A titre d'illustration, la figure 9 présente un exemple d'une telle méthode. A partir de l'image SAR 10 présentée figure 1, on isole une zone polluée 11 par des échos ambigus en Distance. Une transposition dans le domaine fréquentiel 95, par exemple par transformée de Fourier suivant l'axe Distance, est appliquée sur cette image Doppler 11. L'image 92 présente le résultat obtenu. Cette image 92 permet de visualiser la «signature» de ces échos dans le domaine Fréquentiel entre chaque plage fréquentielle associée à chaque spectre élémentaire. Enfin, une intégration en puissance 96 suivant l'axe Doppler permet de visualiser dans le domaine Fréquentiel la répartition de l'énergie moyennée sur l'ensemble des échos ambigus. L'image 93 présente le résultat final. Sur cette image 96 on visualise l'ensemble de la bande synthétique (dont la largeur B est supérieure à 100MHz), formée à partir d'une forme d'onde «step-frequency» constituée d'un motif de K=8 impulsions émises suivant un ordre non monotone pour les fréquences porteuses $F_k$. Sur cette courbe, les frontières entre les 8 spectres élémentaires sont clairement identifiables.

A l'issue d'une compression Distance, à l'intérieur de la bande synthétique totale, la majeure partie de l'énergie parasite associée aux échos ambigus en Distance, dont le rang d'ambiguïté n'est pas un multiple de K, se concentre sur un nombre limité de plages fréquentielles de largeurs réduites. Chacune de ces plages fréquentielles contient une fréquence «frontière» délimitant 2 spectres élémentaires contigus. La largeur cumulée de l'ensemble de ces plages fréquentielles est significativement plus petite que la bande totale couverte B. La pollution reste cantonnée aux jonctions entre spectres élémentaires.

Afin de limiter l'apparition de ces échos parasites, l'invention propose un procédé de filtrage des ambiguïtés Distance liées à l'utilisation d'une forme d'onde à bande synthétique.

Selon un premier mode de mise en oeuvre du procédé de l'invention, un filtre lacunaire est appliqué au signal issu de la compression distance après transposition de l'image Distance-Doppler brute dans le domaine fréquentiel. Le filtrage consiste à créer des lacunes de largeurs réduites dans la bande synthétique totale, aux endroits où se concentre cette pollution. A l'intérieur d'une lacune, la valeur du spectre est forcée à zéro. Ce filtre lacunaire a pour but d'atténuer significativement la pollution occasionnée.

Un motif de lacunarité simple peut être défini en répartissant régulièrement des lacunes de même largeur centrées sur chacune des jonctions entre les spectres élémentaires. L'emplacement des jonctions entre spectres élémentaire étant connu, la définition d'un tel motif ne requiert qu'un seul paramètre spécifiant un taux de lacunarité pour le filtre. Ce taux correspond au ratio entre la largeur cumulée des lacunes et la bande totale B couverte par le radar. La valeur de ce taux de lacunarité est déterminée de manière à ne pas altérer significativement le signal utile tout en éliminant la plus grande partie de l'énergie des signaux pollueurs issus des échos ambigus. La valeur de ce taux est donc déterminée de façon à conserver la majeure partie de l'énergie du spectre de l'onde réfléchie et à limiter la dégradation de la réponse impulsionnelle en distance. La valeur utilisée pour ce taux de lacunarité permet ne pas altérer significativement le signal utile tout en éliminant la plus grande partie de l'énergie des signaux pollueurs issus des échos ambigus

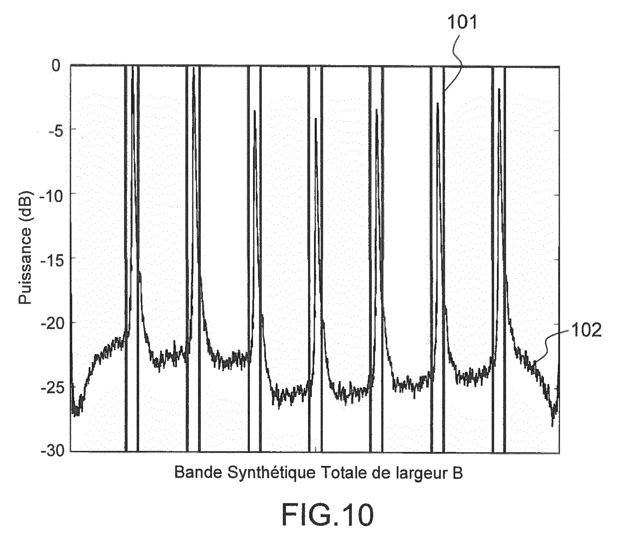

La figure 10 représente un exemple de fonction de transfert d'un filtre lacunaire «simple» 101 superposé à la courbe représentative 102 de la répartition d'énergie parasite liée aux échos ambigus en distance dans la bande synthétique. Chaque lacune est de même largeur et centrée sur un pic d'énergie à la jonction entre deux spectres élémentaires. La courbe 102 est obtenue à partir d'une acquisition avec, à l'émission, une forme d'onde à bande synthétique comportant 8 impulsions, on retrouve par conséquent la contribution des 8 spectres élémentaires. Dans cet exemple, le motif de lacunarité 101, se caractérise par un taux de lacunarité inférieur à 20%.

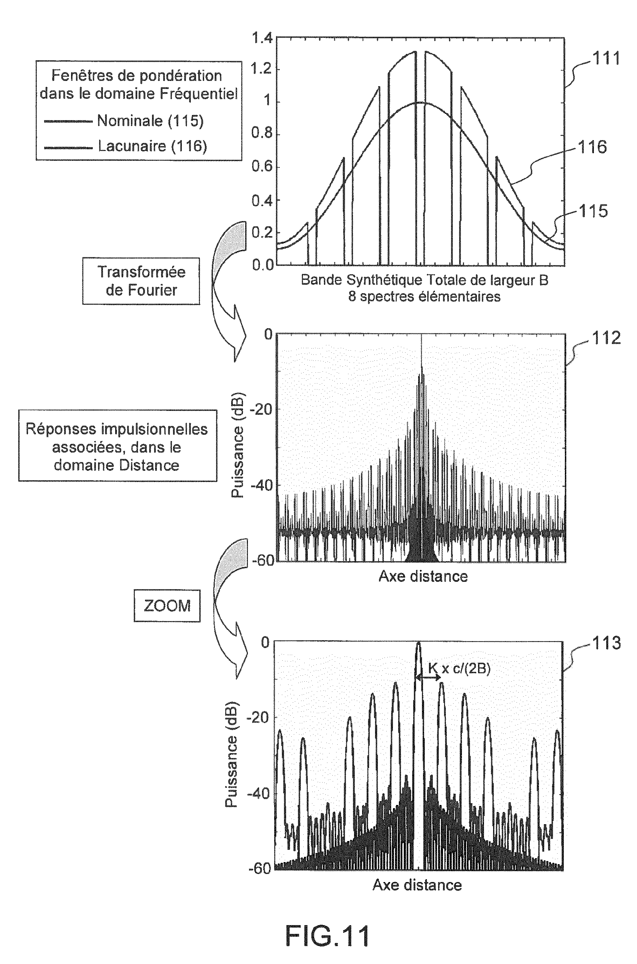

Le filtre lacunaire permet d'éliminer la majeure partie de l'énergie parasite associée aux échos ambigus, cependant, la présence de lacunes à l'intérieur de la bande synthétique affecte également les échos utiles appartenant à la zone d'intérêt imagée. Elle s'accompagne en effet d'une dégradation de la réponse impulsionnelle en Distance. Cette dégradation se traduit par l'apparition de lobes secondaires régulièrement espacés, dont le niveau est fonction du taux de lacunarité utilisé. Cette apparition de lobes secondaires parasites périodiques est illustrée sur les graphiques 112 et 113 de la figure 11.

En outre, dans les zones de l'image Doppler épargnées par la pollution liée aux ambiguïtés Distance, l'image obtenue après application du filtre lacunaire dans le domaine Fréquentiel voit son contraste dégradé par rapport à l'image originale.

Afin de corriger ces effets indésirables, une première solution peut consister à «reconstruire» les portions manquantes de la bande synthétique totale. Pour ce faire, les parties du spectre occultées par les lacunes peuvent être estimées d'après la seule information contenue dans les parties encore disponibles du spectre. Pour cela, le spectre est modélisé comme une somme de signaux «canoniques» caractérisés chacun par une amplitude et une fréquence fixe. Cette méthode est décrite, par exemple, dans le brevet européen EP 1 326 091.

Cependant, ce type de méthode n'est effectif que sur les échos bénéficiant d'un rapport signal sur bruit significatif. Par conséquent, l'image résultat souffre d'une dégradation du contraste, malgré la suppression des lobes secondaires parasites (suivant l'axe Distance) issus des échos non ambigus très réflectifs présents dans l'image.

Une deuxième méthode consiste à utiliser l'image Distance-Doppler «brute» et L'image Distance-Doppler «lacunaire». Ces deux images suivantes possèdent des caractéristiques complémentaires.

L'image Distance-Doppler «brute» présente une qualité nominale de réponse impulsionnelle en Distance, c'est à dire non dégradée par la présence de lacunes à l'intérieur de la bande synthétique totale. En revanche, certaines zones de l'image sont polluées par des «fantômes»,ou échos parasites, issus d'échos ambigus en Distance et très réflectifs.

L'image Distance-Doppler «lacunaire», obtenue après avoir introduit des lacunes dans la bande synthétique totale au niveau des jonctions entre spectres élémentaires, présente l'avantage d'être débarrassée de la pollution générée par la présence d'échos ambigus en Distance. En revanche, à cause de la dégradation de la réponse impulsionnelle en distance liée à la présence des lacunes, cette image souffre de la présence de lobes secondaires parasites en Distance issus d'échos non ambigus très réflectifs appartenant à la zone imagée.

De façon à bénéficier de l'ensemble des qualités propres à chacune de ces deux images une variante du procédé selon l'invention consiste à prendre, pour chacun des pixels de l'image Distance-Doppler résultat, la valeur d'amplitude minimale entre les deux valeurs lues sur chacune des deux images Distance-Doppler brute et Distance-Doppler lacunaire. Ainsi, si le pixel concerné appartient à une zone de l'image polluée par un fantôme associé à un écho ambigu, la valeur finale retenue sera celle issue de l'image lacunaire débarrassée de la pollution. Au contraire, si le pixel concerné correspond à une position où un lobe secondaire parasite en distance, issu d'un écho fort non ambigu, est apparu sur l'image lacunaire, c'est la valeur de l'image brute qui sera finalement retenue.

Il est à noter qu'avant de procéder à la recherche de la valeur minimale entre l'image brute et l'image lacunaire, il convient de normaliser les valeurs des échantillons de ces deux images entre elles de manière à s'assurer qu'un même réflecteur ponctuel de réflectivité significative présente un niveau identique sur les deux images.

A titre d'illustration, la figure 11, présente deux fenêtres de pondération 115 et 116 pouvant être utilisées, dans le domaine Fréquentiel, pour normaliser l'image brute et l'image lacunaire. En effet, comme vu précédemment, la multiplication dans le domaine Fréquentiel par une fenêtre de pondération permet classiquement de diminuer le niveau de lobes secondaires de la réponse impulsionnelle «nominale» en distance, au prix d'une dégradation de la résolution Distance.

Suivant un mode de mise en oeuvre, l'application du motif de lacunarité peut s'effectuer en utilisant une fenêtre de pondération lacunaire. L'image brute et l'image lacunaire sont alors obtenues en multipliant le même spectre (non pondéré) respectivement par la fenêtre de pondération nominale 115 et par la fenêtre de pondération lacunaire 116. La normalisation des images consiste alors à normaliser ces deux fenêtres de pondération, de manière à ce que les valeurs des échantillons des deux réponses impulsionnelles en Distance associées (obtenues après transposition dans le domaine fréquentiel) présentent un même niveau pour le lobe principal. Un tel résultat est obtenu lorsque les 2 intégrales (sur la largeur de bande $B$) des 2 fonctions de pondération, à savoir la pondération nominale et lacunaire, fournissent la même valeur.

La normalisation des images entre elles a pour objectif de garantir qu'en l'absence de pollution, chacune des $N_\alpha$ images générées à partir de $N_\alpha$ motifs de lacunarité présente en moyenne sur chaque pixel un niveau supérieur ou égal à celui lu sur l'image brute.

A l'issue de l'opération de recherche de valeur d'amplitude minimale entre l'image brute et l'image lacunaire, les ultimes défauts résiduels sur l'image résultat concernent les pixels positionnés à l'intersection des deux ensembles suivants :

- Le premier ensemble regroupe les zones polluées par les échos ambigus en Distance sur l'image brute ;
- Le second inclut les positions des pixels de l'image lacunaire sur lesquels sont apparus des lobes secondaires parasites en Distance de niveau significatif. Ces lobes secondaires parasites proviennent d'échos non ambigus fortement réfléchissants.

Le nombre de pixels de ce dernier ensemble peut être limité en incluant dans le procédé une étape supplémentaire de reconstruction de la bande lacunaire. La recherche de la valeur d'amplitude minimale se fait alors en utilisant non plus l'image lacunaire mais l'image «reconstruite »**.**

Il est à noter que dans le cas d'une reconstruction de la bande lacunaire, l'opération de normalisation entre images doit être adaptée en conséquence. En effet, pour les échos ponctuels de forte réflectivité, bénéficiant d'un fort rapport signal à bruit, le spectre obtenu à l'issu de la reconstruction est quasiment identique sur l'ensemble de la bande B au spectre original avant application du motif de lacunarité. Ce comblement adéquat des lacunes rend donc inutile l'opération de normalisation pour ce type d'échos.

En revanche, pour les échos non ponctuels et/ou de réflectivités moindres, la reconstruction des lacunes est peu efficace. En absence de normalisation, ces échos dont le spectre reste lacunaire voient donc leur puissance atténuée sur l'image reconstruite, en comparaison de l'image originale. Ceci est en particulier vérifié pour des échos rétrodiffusés par une parcelle de terrain de réflectivité homogène (comme par exemple une zone de gazon, un champ, etc...) appartenant à la zone imagée. Pour ces échos, assimilables à du bruit occupant une plage Distance donnée, la puissance est amputée d'un pourcentage correspondant au taux de lacunarité. Afin que les puissances associées à ce type de réflecteur restent identiques sur les deux images, à savoir l'image originale et l'image reconstruite, la normalisation est effectuée en considérant non plus un écho ponctuel (comme c'était le cas pour la solution sans reconstruction) mais un bruit occupant l'ensemble de la bande B. On parle de normalisation par rapport au bruit, et non par rapport aux ponctuels. Si on appelle R le taux de «remplissage» du motif de lacunarité c'est-à-dire le ratio entre la largeur de bande encore disponible et la largeur totale B, la normalisation consiste donc à multiplier l'amplitude de chaque pixel de l'image reconstruite par un facteur égal à $1/\sqrt{R}$ et non plus à $1/R$.

Une autre solution permettant de réduire les lobes secondaires parasites provenant d'échos non ambigus fortement réfléchissants peut consister à utiliser un motif lacunaire caractérisé par un taux de lacunarité le plus faible possible permettant néanmoins d'éliminer la plus grande partie possible de l'énergie parasite. L'idée est d'adapter le motif de lacunarité de façon à ce que les lacunes épousent au mieux les plages fréquentielles réellement polluées. Pour ce faire, les résultats précédemment décrit dans la présentation de la compression distance avec une forme d'onde à bande synthétique avec K impulsions sont mis à profit.

Pour un réflecteur MA appartenant à une plage Distance ambiguë caractérisée par une valeur de rang d'ambiguïté $\alpha$ donnée (rang non multiple de K), la répartition de l'énergie parasite à l'intérieur de la bande synthétique totale peut être caractérisée finement d'après la connaissance du motif d'émission utilisé (spectre associé à chaque impulsion, ordre d'émission des fréquences porteuses $F_k$) et des caractéristiques de la chaîne de réception du radar (fonction de transfert du filtre passe-bande, fréquence d'échantillonnage des codeurs).

On applique donc le procédé de compression distance décrit précédemment à un écho ambigu issu du rang d'ambiguïté $\alpha$. A partir de la fonction de répartition de l'énergie parasite trouvée, on adapte la position et la tailles des lacunes dans le motif de lacunarité de façon à maximiser la réjection des échos ambigus parasites associés à ce rang d'ambiguïté $\alpha$. Le nouveau motif prend ainsi en compte le fait que pour un rang d'ambiguïté donné, la pollution ne se répartie généralement pas de manière symétrique de part et d'autre des jonctions entre spectres élémentaires.

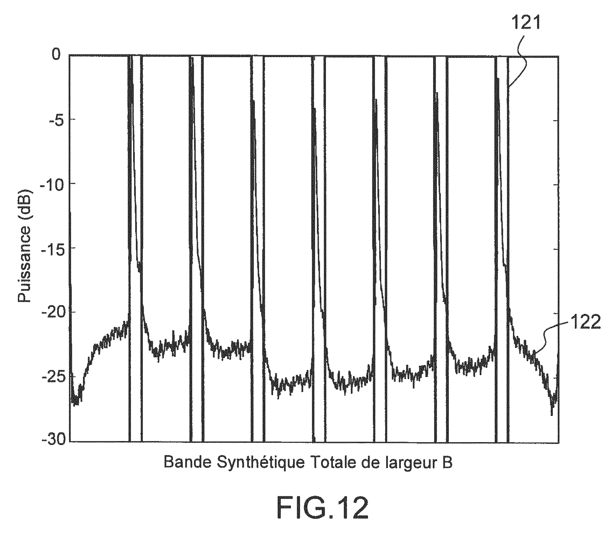

A titre d'illustration la figure 12 présente un exemple de fonction de transfert d'un filtre adapté 121 superposé à la fonction de répartition de l'énergie parasite 122.

On rappelle que le motif de lacunarité «simple», précédemment décrit, était constitué de lacunes périodiques de même largeur disposées de manière symétrique de part et d'autre de chaque jonction entre spectre élémentaires. Dans cette variante de mise en oeuvre, le motif de lacunarité est «adapté» à la répartition de l'énergie parasite et tient compte du fait que cette répartition n'est pas symétrique à la jonction tout en gardant le même taux de lacunarité.

Comme vu précédemment, les plages ambiguës en distance peuvent être classées suivant leur degré de nocivité potentielle, c'est à dire suivant le niveau d'énergie parasite générée par des échos issus de réflecteurs positionnés à l'intérieur de ces plages. Ce niveau dépend de la géométrie d'acquisition, en particulier de la distance du réflecteur ambigu. Il dépend également des caractéristiques du diagramme de l'antenne du radar, permettant de quantifier la perte (en terme de bilan de liaison) due au fait que le réflecteur ambigu est excentré angulairement par rapport à la direction pointée par le faisceau radar 25.

De plus, suivant le motif d'émission utilisé, notamment l'ordre des fréquences porteuses $F_k$, certaines jonctions entre spectres élémentaires peuvent ne pas être affectées par cette pollution.

Par conséquent, au lieu d'utiliser un unique motif de lacunarité «simple» constitué de lacunes périodiques disposées de manière symétrique de part et d'autre de chaque jonction, il peut être intéressant d'utiliser $N_\alpha$ motifs de lacunarité adaptés aux $N_\alpha$ valeurs de rangs d'ambiguïté jugés comme nocifs c'est-à-dire susceptible d'être à l'origine d'une pollution visible sur une image Distance-Doppler.

L'opération de recherche de valeur d'amplitude minimale se fait alors non plus sur deux images Distance-Doppler comme dans le cas d'un motif de lacunarité «simple» mais sur $N_\alpha+1$ images Distance-Doppler à savoir les $N_\alpha$ images lacunaires calculées d'après les $N_\alpha$ motifs de lacunarité, comparées à l'image «brute» non lacunaire.

Il est à noter que pour une forme d'onde à bande synthétique le nombre de rangs d'ambiguïté nocifs, c'est-à-dire pour lesquels le niveau de pollution peut potentiellement faire apparaître des «fantômes» visibles sur l'image finale, est généralement très limité. Ce nombre est généralement inférieur ou égal à deux.

Ce nouveau mode de mise en oeuvre peut donc comprendre, pour chaque rang d'ambiguïté nocif, une étape de transposition de l'image Distance-Doppler dans le domaine fréquentiel, une étape de filtrage lacunaire en utilisant un filtre adapté au rang de nocivité considéré, une étape de retour dans le domaine distance par exemple par une transformée de Fourier discrète inverse suivant l'axe fréquentiel. Le procédé comprend ensuite une étape de filtrage consistant à calculer, pour chaque pixel, la valeur minimale entre les images lacunaires et l'image brute.

Eventuellement, une étape de reconstruction des lacunes présentes dans la bande synthétique totale peut être insérée avant l'étape de transposition dans le domaine distance. Dans ce cas, le filtrage final se fera en comparant et en retenant pour chaque pixel la valeur minimale entre les images lacunaires reconstruites et l'image brute.

Il est à noter que cette démarche se base sur l'hypothèse, très généralement vérifiée, que lorsque plusieurs rangs d'ambiguïté viennent polluer l'image brute, les échos ambigus associés à un rang d'ambiguïté donné occupent dans l'image des zones différentes de celles polluées par les échos ambigus issus d'un autre rang d'ambiguïté.

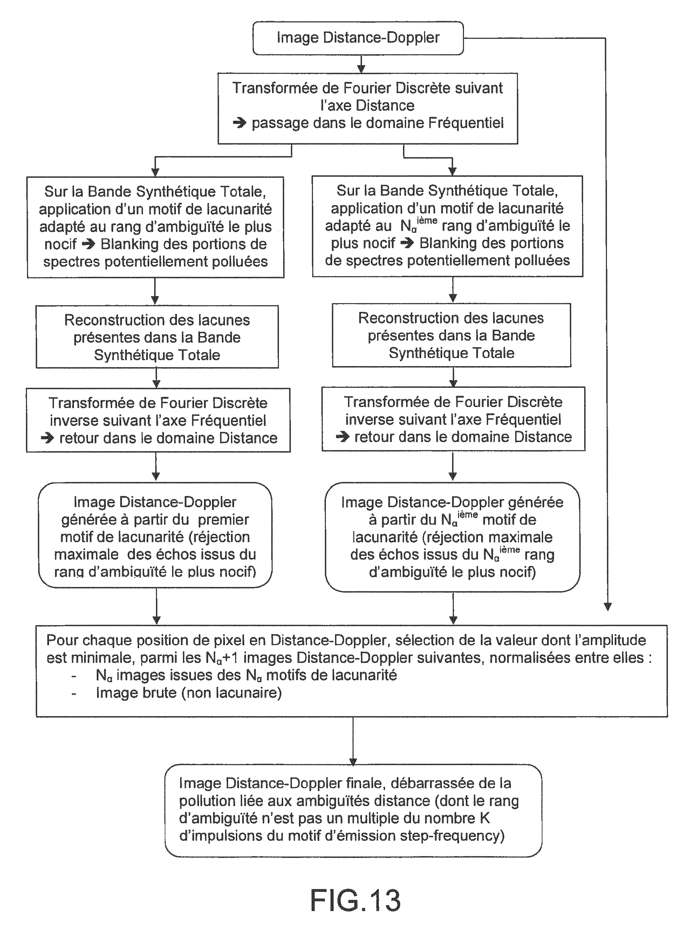

La figure 13 illustre un exemple d'organigramme représentant les étapes possibles du procédé de filtrage selon l'invention. Ce synoptique présente la version la plus «aboutit» du procédé de filtrage des échos ambigus en distance, mais également la plus coûteuse en terme de charge de calcul. Dans cet exemple, deux rangs d'ambiguïté Distance ont été considéré, ce qui correspond au cas le plus courant.

Suivant cette variante, à l'issue d'une compression distance des échos reçus par le radar, le procédé de filtrage de l'invention comprend une étape de transposition de l'image Distance Doppler dans le domaine fréquentiel, une étape de modélisation de la répartition de l'énergie parasite liée à la présence d'échos ambigus à l'intérieur de la bande synthétique, une étape de filtrage à l'aide de filtres lacunaires adaptés à chaque rang d'ambiguïté nocif. La fonction de transfert de chaque filtre lacunaire est formée d'un motif de lacunarité adapté à chaque rang d'ambigüité. Cette fonction de transfert peut être élaborée à partir d'un taux de lacunarité prédéfini et de la répartition de l'énergie parasite associée à chaque rang d'ambigüité en simulant les étapes d'un procédé de compression distance appliqué à un écho issu de ce rang d'ambigüité jusqu'à la constitution de la Bande synthétique Totale filtrée. Le filtrage est ensuite suivi d'une une étape de reconstruction des lacunes du spectre de l'image lacunaire. Cette reconstruction peut être réalisée à partir de ses parties non annulées du spectre par modélisation de ce spectre comme une somme de signaux canoniques. L'image reconstruite est ensuite transposée dans le domaine distance, par exemple par transformée de Fourier inverse. L'image résultat du procédé est ensuite établie à l'issue d'une étape de filtrage consistant à calculer, pour chaque pixel de l'image résultat, la valeur minimale entre l'image Distance-Doppler brute et la ou les images lacunaires ;

Il est utile de noter que les opérations de reconstruction de la bande lacunaire sont généralement gourmandes en charge de calcul. Afin de diminuer la charge de calcul, une autre version dans laquelle ces opérations ne seraient pas effectuées, peut être envisagée au prix d'une légère dégradation des performances.

Un autre moyen de diminuer la charge de calcul peut également consister à utiliser un filtre de lacunarité «simple». Le motif de lacunarité de la fonction de transfert de ce filtre peut être calculé à partir d'une modélisation simple de la répartition de l'énergie parasite en considérant que la pollution est régulièrement répartie à l'intérieur de plages fréquentielles de même largeur, centrées sur chaque jonction entre spectres élémentaires.

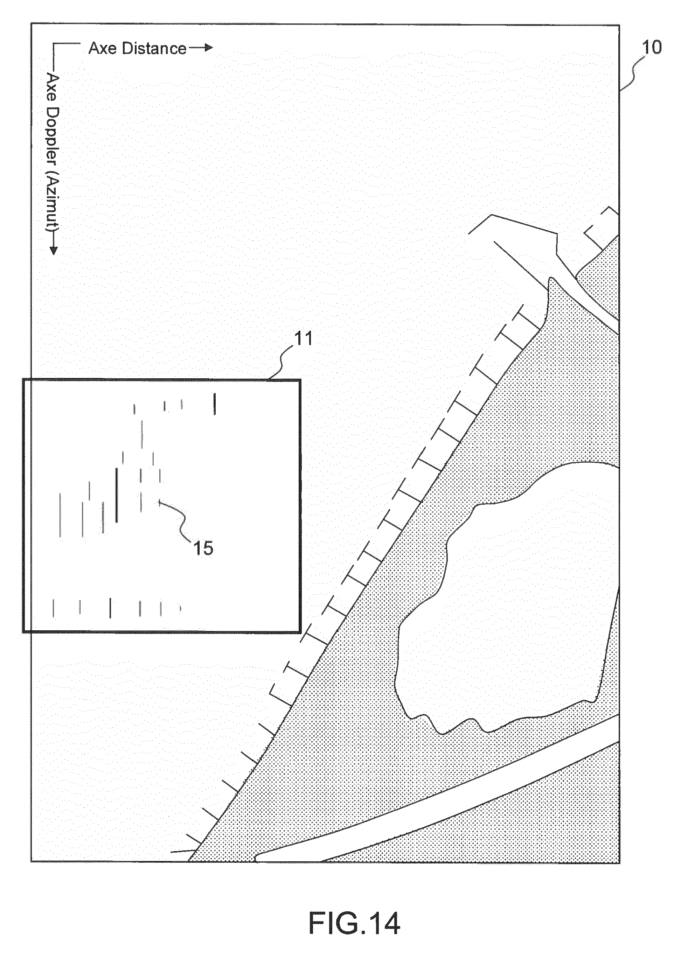

Les figures 14 à 16 présentent des exemples de résultats en appliquant trois versions du procédé selon l'invention.

L'image SAR brute initiale correspond à celle présentée figure 1. Cette image 10 comprenant une zone 11 polluée par la présence d'échos ambigus 15 de fortes réflectivités. Cette image possède une résolution de classe métrique, obtenue avec une forme d'onde à bande synthétique utilisant un motif d'émission de 8 impulsions dont les fréquences porteuses $F_k$ sont émises suivant un ordre non monotone.

La figure 14 illustre les résultats obtenus en appliquant une première version du procédé de l'invention utilisant un motif de lacunarité simple. Dans cette version les lacunes sont régulièrement réparties à l'intérieur de la Bande synthétique Totale, de part et d'autre de chaque jonction entre spectres élémentaires. Ce motif de lacunarité est présenté figure 10.

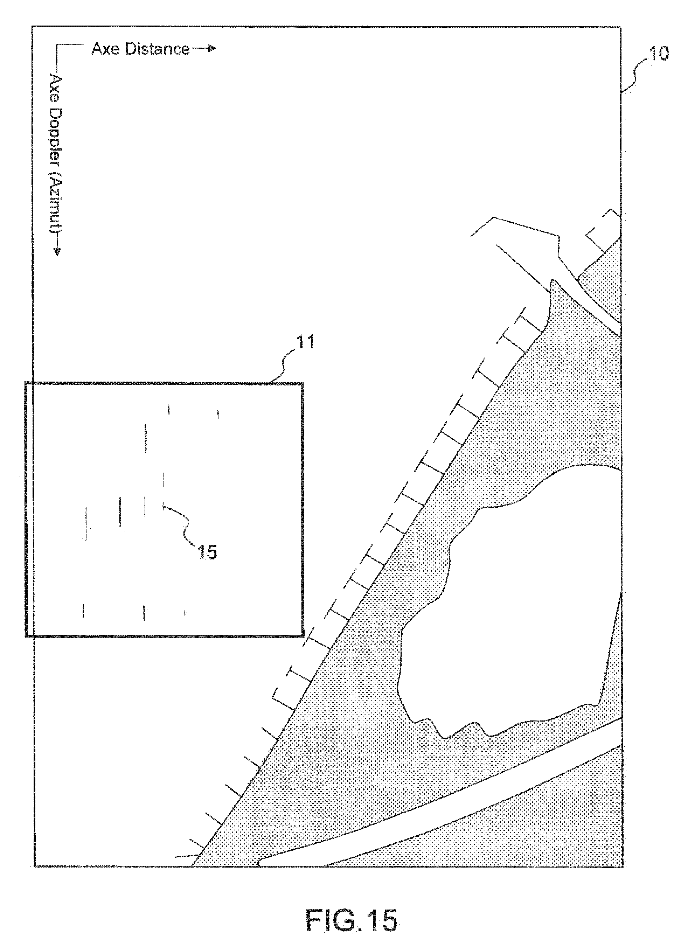

La figure 15 présente les résultats obtenus après filtrage en utilisant une deuxième version du procédé. Dans cet exemple, le motif de lacunarité utilisé est adapté au rang d'ambiguïté jugé a priori comme le plus nocif. Ce motif, présentant un taux de lacunarité identique au motif de lacunarité simple précédent, est illustré par la figure 12.

Pour minimiser la charge de calcul requise, aucune de ces deux premières versions n'utilise d'étapes de reconstruction de la bande lacunaire.

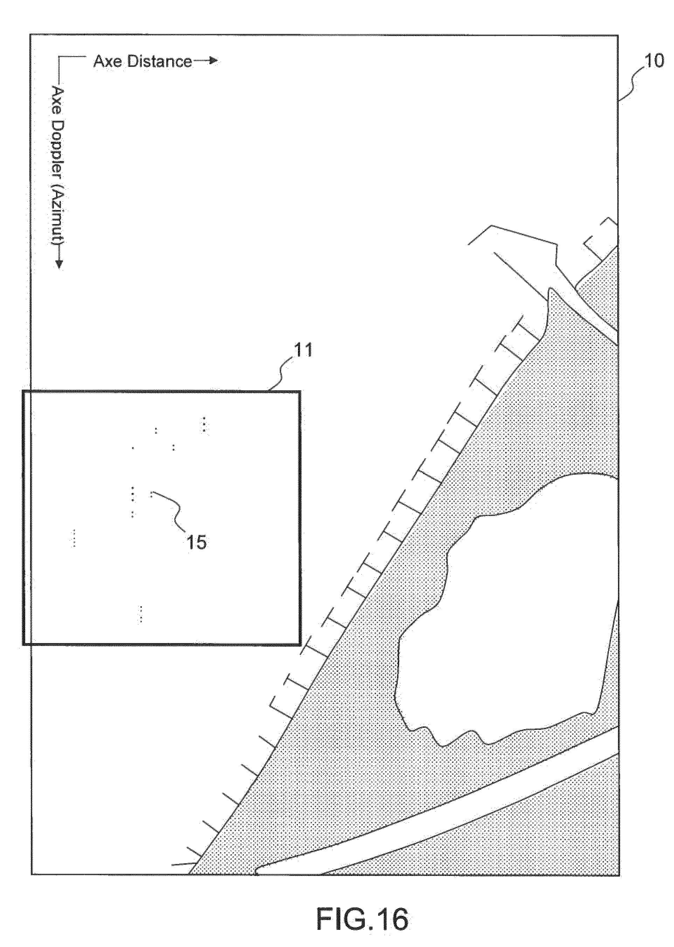

La figure 16 présente quant à elle une troisième version utilisant une étape de reconstruction de la bande lacunaire. Cette dernière version, la plus aboutie, reprend le motif de lacunarité adapté déjà utilisé par la version précédente.

Ces trois images résultats permettent de mettre en évidence l'efficacité du procédé de filtrage des échos ambigus en Distance de l'invention. L'utilisation d'un motif de lacunarité adapté permet d'améliorer la réjection de la pollution par rapport à un motif de lacunarité simple. Enfin, l'utilisation d'une étape de reconstruction de la bande lacunaire permet d'atténuer la pollution résiduelle localisée sur les cases Doppler où sont présents des réflecteurs non ambigus de très fortes réflectivités. Ces réflecteurs sont à l'origine de lobes secondaires parasites en distance, sur les images lacunaires.

## Revendications

**1.** Procédé de filtrage d'une image Distance-Doppler brute produite par un radar et polluée par des échos ambigus en distance liés à l'utilisation d'une forme d'onde de largeur de bande B à bande synthétique à l'émission, consistant à émettre ladite bande B par morceaux, suivant un motif composé de K impulsions, chacune de ces impulsions émet une largeur de bande égale à un K$^{ième}$ de la bande B, ledit procédé étant **caractérisé en ce qu'**il comprend au moins :

- une étape de transposition de l'image Distance-Doppler dans le domaine fréquentiel ;
- une étape de modélisation de la répartition de l'énergie parasite liée à la présence d'échos ambigus à l'intérieur de la bande synthétique ;
- une étape de filtrage à l'aide d'un filtre lacunaire, la fonction de transfert dudit filtre étant élaborée en fonction de la répartition de l'énergie parasite et d'un taux de lacunarité spectrale prédéfini ;.

2. Procédé selon la revendication précédente **caractérisé en ce qu'**il comprend :

- une étape de transposition dans le domaine distance ;
- une étape de filtrage consistant à calculer, pour chaque pixel de l'image résultat, la valeur minimale entre l'image Distance-Doppler brute et la ou les images lacunaires de façon à bénéficier de l'ensemble des qualités propres à chacune de ces deux images ;

3. Procédé selon une des revendications précédentes **caractérisée en ce qu'**il comprend au moins une étape de reconstruction des lacunes du spectre de l'image lacunaire, à partir de ses parties non annulées, par modélisation dudit spectre comme une somme de signaux canoniques.

4. Procédé selon une des revendications précédentes **caractérisé en ce que** la fonction de transfert du filtre lacunaire est formée d'un motif de lacunarité simple dans lequel chaque lacune est de même largeur et centrée sur la jonction entre deux spectres élémentaires.

5. Procédé selon une des revendications 2 à 3 **caractérisé en ce que** la fonction de transfert du filtre lacunaire est formée d'un motif de lacunarité adapté à un écho ambigu de rang d'ambiguïté donné, ladite fonction de transfert étant élaborée à partir de la répartition de l'énergie parasite associée à cet écho ambigu en simulant les étapes d'un procédé de compression distance appliqué à cet écho ambigu.

6. Procédé selon l'une des revendications 2 à 5 **caractérisé en ce qu'**il comprend une étape de normalisation entre elles, des valeurs de l'image brute et de la ou les images lacunaires.

## Patentansprüche

1. Verfahren zum Filtern eines rohen Distanz-Doppler-Bildes, das von einem Radar produziert und durch ferne mehrdeutige Echos kontaminiert wird, die mit der Verwendung einer synthetischen Bandwellenform von Bandbreite B beim Senden assoziiert sind, das das portionsweise Senden des Bandes B gemäß einem Muster bestehend aus K Pulsen beinhaltet, wobei jeder dieser Pulse eine Bandbreite gleich einem K$^{stel}$ des Bandes B sendet, wobei das Verfahren **dadurch gekennzeichnet ist, dass** es wenigstens die folgenden Schritte beinhaltet:

- einen Schritt des Transponierens des Distanz-Doppler-Bildes in die Frequenzdomäne;
- einen Schritt des Modellierens der Verteilung von mit der Anwesenheit von mehrdeutigen Echos innerhalb des synthetischen Bandes assoziierte Störenergie;
- einen Schritt des Filterns mit einem lakunären Filter, wobei die Transferfunktion des Filters in Abhängigkeit von der Verteilung der Störenergie und einer vordefinierten Rate von spektraler Lakunarität erzielt wird.

2. Verfahren nach dem vorherigen Anspruch, **dadurch gekennzeichnet, dass** es Folgendes beinhaltet:

- einen Schritt des Transponierens in der Distanzdomäne;
- einen Schritt des Filterns, der das Berechnen, für jedes Pixel des Ergebnisbildes, des Mindestwertes zwischen dem rohen Distanz-Doppler-Bild und den ein oder mehreren lakunären Bildern beinhaltet, um von allen Qualitäten zu profitieren, die jedem der beiden Bilder eigen sind.

3. Verfahren nach einem der vorherigen Ansprüche, **dadurch gekennzeichnet, dass** es wenigstens einen Schritt des Rekonstruierens der Lücken des Spektrums des lakunären Bildes auf der Basis seiner nicht stornierten Teile durch Modellieren des Spektrums als eine Summe von kanonischen Signalen beinhaltet.

4. Verfahren nach einem der vorherigen Ansprüche, **dadurch gekennzeichnet, dass** die Transferfunktion des lakunären Filters aus einem einfachen Lakunaritätsfilter besteht, in dem jede Lücke dieselbe Breite hat und auf dem Übergang zwischen zwei Elementarspektren zentriert ist.

5. Verfahren nach einem der Ansprüche 2 bis 3, **dadurch gekennzeichnet, dass** die Transferfunktion des lakunären Filters aus einem Lakunaritätsmuster besteht, angepasst an ein mehrdeutiges Echo mit einem gegebenen Mehrdeutigkeitsrang, wobei die Transferfunktion auf der Basis der Verteilung der mit diesem mehrdeutigen Echo assoziierten Störenergie durch Simulieren der Schritte eines auf das Störecho angewendeten Verfahrens zur Distanzkompression erstellt wird.

6. Verfahren nach einem der Ansprüche 2 bis 5, **dadurch gekennzeichnet, dass** es einen Schritt des Normalisierens von Werten des rohen Bildes und der ein oder mehreren lakunären Bilder untereinander beinhaltet.

## Claims

1. A method for filtering a raw Distance-Doppler image produced by a radar and polluted by remote ambiguous echoes associated with the use of a synthetic band waveform of bandwidth B on emission, comprising emitting said band B in portions, according to a pattern made up of K pulses, each of said pulses emitting a bandwidth equal to a $K^{th}$ of the band B, said method being **characterised in that** it comprises at least:

   a step of transposing said Distance-Doppler image in the frequency domain;
   a step of modelling the distribution of spurious energy associated with the presence of ambiguous echoes inside said synthetic band;
   a step of filtering using a lacunar filter, the transfer function of said filter being established as a function of the distribution of the spurious energy and of a predefined rate of spectral lacunarity.

2. The method according to the preceding claim, **characterised in that** it comprises:

   a step of transposing in the distance domain;
   a step of filtering comprising computing, for each pixel of the resulting image,
   the minimum value between said raw Distance-Doppler image and the one or more lacunar images so as to benefit from all of the qualities specific to each of said two images.

3. The method according to any one of the preceding claims, **characterised in that** it comprises at least one step of reconstructing the lacunae of the spectrum of the lacunar image on the basis of its non-cancelled parts, by modelling said spectrum as a sum of canonical signals.

4. The method according to any one of the preceding claims, **characterised in that** the transfer function of the lacunar filter is made up of a simple lacunarity pattern, in which each lacunar is the same width and is centred on the junction between two elementary spectra.

5. The method according to any one of claims 2 to 3, **characterised in that** the transfer function of the lacunar filter is made up of a lacunarity pattern adapted to an ambiguous echo with a given ambiguity rank, said transfer function being established on the basis of the distribution of the spurious energy associated with this ambiguous echo by stimulating the steps of a method for distance compression applied to said ambiguous echo.

6. The method according to any one of claims 2 to 5, **characterised in that** it comprises a step of mutually normalising values of the raw image and of the one or more lacunar images.

FIG.1

Vue de dessus

22

P $\vec{V}$

azimut

21

M

Zone
imagée

Faisceau radar

25

Vue de côté

22

P $\vec{V}$

21

M

Faisceau radar

Zone imagée

FIG.2

**Signal émis**

30 B F

Fréquence

Amplitude

Temps

31 **Signal rétro-diffusé par M**

Fréquence

Amplitude

Temps

315

Application d'une
Transformée de Fourier

32 **Spectre associé au signal rétro-diffusé par M**

Amplitude

Fréquence

325

F

33 **Fonction de transfert du filtre (bande $B$ centrée sur $F$ )**

Amplitude

F

Filtrage pour récupérer
la bande utile
→ multiplication du
spectre par la fonction
de transfert du filtre

34 **Spectre après filtrage**

F

35 **Spectre après filtrage et échantillonnage**

$F - F_{ech}$     F     $F + F_{ech}$     Fréquence

355

345     365

Echantillonnage à
$F_{ech}$
→ duplication
périodique du
spectre

36 $|S(v)|$

B **Extraction**

F

Compression Distance : Filtrage
à l'aide d'une réplique C(v)
(réponse associée à la distance
nulle)

37 **Spectre après Compression distance**

$|S'(v)|$

F     Fréquence

Application d'une
Transformée de
Fourier inverse

375

**Profil en Distance
résultat de la compression Distance)**

Amplitude     Pic de compression

Axe Distance

38     380

380

$$\delta x_r = \frac{c}{2B}$$

ZOOM

# FIG.3

Vue de dessus

P $\vec{V}$ 41

MA−

21

33

M

Zone imagée

MA+

Faisceau radar

25

Plage distance ambiguë :
échos occupant la même
plage temporelle de
réception que les échos de la
zone imagée
(rang d'ambiguïté −1)

Plage distance ambiguë :
échos occupant la même plage
temporelle de réception que les
échos de la zone imagée
(rang d'ambiguïté +1)

22

Vue de côté

P $\vec{V}$

MA−

41

M

21

Zone imagée

MA+

43

Faisceau radar

FIG.4

FIG.5

FIG.6

Signal émis

Fréquence

$F_3$
$F_2$
$F$

B

510

51

$\}$ $\Delta F$

T/K

Amplitude

Temps

Signaux rétro-diffusés par M, MA-, MA+

Fréquence

52

520

Amplitude

Temps

523

**E₁**

Application d'une Transformée de Fourier

Spectres associés (M, MA-, MA+)

73

Amplitude

$F_1$   $F_2$   $F_3$

Fréquence

**E₂**

Fonction de transfert du filtre (bande $\Delta F$ centrée sur $F_3$)

74

Amplitude

$F_3$

*Filtrage pour récupérer la bande utile*
*→ multiplication des spectres par la fonction de transfert du filtre*

Spectres après filtrage

75

$F_3$

Echantillonnage à $F_{ech}$
→ duplication périodique des spectres

Spectres après filtrage et échantillonnage

76

$F_3 - 2F_{ech}$   $F_3 - F_{ech}$   $F_3$   $F_3 + F_{ech}$

Fréquence

**E₃**

Parties de Spectres retenues pour élaborer la Bande Synthétique Totale

77

Extraction de la partie utile du Spectre

770

$F_3$

$\Delta F$

Fréquence

**E₄**

# FIG.7

**81** Spectres élémentaires associés à la 1ère impulsion de la n-ième répétition du motif d'émission

Amplitude → $F_1$ → Fréquence

**82** Spectres élémentaires associés à la 2ième impulsion de la n-ième répétition du motif d'émission

Amplitude → $F_2$ → Fréquence

**83** Spectres élémentaires associés à la Kième impulsion de la n-ième répétition du motif d'émission

Amplitude → $F_3$ → Fréquence

**E5** Constitution de la Bande Synthétique Totale
→ Concaténation des K spectres associés aux K impulsions du motif

**84** Bande Synthétique Totale « brute »

Amplitude $|S(v)|$ → $F$ → Fréquence (v)

B

**E6** Filtrage à l'aide d'une réplique C(V) (réponse associée à la distance nulle)

**85** Bande Synthétique Totale après Compression Distance

Amplitude $|S'(v)|$ → Fréquence (v)

**E7** Application d'une Transformée de Fourier

**860** $$\delta x_r = \frac{c}{2B}$$

ZOOM

Profil en Distance (résultat de la compression Distance)

**86** Amplitude → Axe Distance

860

Pollution provoquée par un écho ambigu (rang d'ambiguïté +1)

Pollution provoquée par un écho ambigu (rang d'ambiguïté -1)

# FIG.8

Transformée de Fourier Discrète
suivant l'axe Distance ─ 35

─Axe Distance──▶

Axe Doppler (Azimut)──▶

11

Axe Fréquentiel ──▶ 92

Axe Doppler (Azimut)──▶

Plages fréquentielles associées
aux spectres élémentaires

B

96 ─ Intégration (en puissance)
suivant les cases Doppler

93 ─ Puissance (dB)

0
-5
-10
-15
-20
-25
-30

Axe fréquentiel

B

FIG.9

FIG.10

FIG.11

FIG.12

Image Distance-Doppler

Transformée de Fourier Discrète suivant l'axe Distance
→ passage dans le domaine Fréquentiel

Sur la Bande Synthétique Totale, application d'un motif de lacunarité adapté au rang d'ambiguïté le plus nocif → Blanking des portions de spectres potentiellement polluées

Sur la Bande Synthétique Totale, application d'un motif de lacunarité adapté au $N_\alpha^{ième}$ rang d'ambiguïté le plus nocif → Blanking des portions de spectres potentiellement polluées

Reconstruction des lacunes présentes dans la Bande Synthétique Totale

Reconstruction des lacunes présentes dans la Bande Synthétique Totale

Transformée de Fourier Discrète inverse suivant l'axe Fréquentiel
→ retour dans le domaine Distance

Transformée de Fourier Discrète inverse suivant l'axe Fréquentiel
→ retour dans le domaine Distance

Image Distance-Doppler générée à partir du premier motif de lacunarité (réjection maximale des échos issus du rang d'ambiguïté le plus nocif)

Image Distance-Doppler générée à partir du $N_\alpha^{ième}$ motif de lacunarité (réjection maximale des échos issus du $N_\alpha^{ième}$ rang d'ambiguïté le plus nocif)

Pour chaque position de pixel en Distance-Doppler, sélection de la valeur dont l'amplitude est minimale, parmi les $N_\alpha+1$ images Distance-Doppler suivantes, normalisées entre elles :
- $N_\alpha$ images issues des $N_\alpha$ motifs de lacunarité
- Image brute (non lacunaire)

Image Distance-Doppler finale, débarrassée de la pollution liée aux ambiguïtés distance (dont le rang d'ambiguïté n'est pas un multiple du nombre K d'impulsions du motif d'émission step-frequency)

FIG.13

FIG.14

FIG.15

FIG.16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1326091 A